# EUROPEAN PATENT SPECIFICATION

(11) **EP 4 266 718 B1**
(45) Date of publication and mention of the grant of the patent: **27.05.2026**
(21) Application number: 21909005.7
(22) Date of filing: 24.11.2021
(51) Int. Cl.: H04W 4/40, H04W 76/14, H04W 76/11, H04W 76/40, H04W 4/021

(54) **MESSAGE FILTERING METHOD AND APPARATUS**
NACHRICHTENFILTERUNGSVERFAHREN UND -VORRICHTUNG
PROCÉDÉ ET APPAREIL DE FILTRAGE DE MESSAGES

(30) Priority: 26.12.2020 CN 202011570800
(43) Date of publication of application: 25.10.2023
(73) Proprietor: Yinwang Intelligent Technologies Co., Ltd., Shenzhen, Guangdong 518129 (CN)
(72) Inventor: YANG, Miao, Shenzhen, Guangdong 518129 (CN); LI, Mingchao, Shenzhen, Guangdong 518129 (CN)
(74) Representative: Pfenning, Meinig & Partner mbB
(86) International application number: PCT/CN2021/132866
(87) International publication number: WO 2022/135006

(56) References cited:
- EP-A1- 3 965 501
- WO-A1-2020/224412
- US-A1- 2019 349 730
- US-A1- 2020 084 592
- US-A1- 2020 205 209
- US-A1- 2020 314 613
- ERICSSON ET AL.: "V2X Service Type", 3GPP TSG-SA WG2 MEETING #138E S2- 2002852, 24 April 2020 (2020-04-24), XP051874380
- "3rd Generation Partnership Project; Technical Specification Group Services and System Aspects; Architecture enhancements for 5G System (5GS) to support Vehicle-to-Everything (V2X) services (Release 16)", 3GPP STANDARD; TECHNICAL SPECIFICATION; 3GPP TS 23.287, 3RD GENERATION PARTNERSHIP PROJECT (3GPP), no. V16.3.0, 9 July 2020 (2020-07-09), pages 1 - 57, XP051924376
- VIVO MOBILE COMMUNICATIONS LTD. ET AL.: "Solution 2: V2X based solution- update", SA WG2 MEETING #139E (E-MEETING) S2-2004272, 12 June 2020 (2020-06-12), XP051890276

## Description

Priority is claimed to Chinese Patent Application No. 202011570800.9, filed with the China National Intellectual Property Administration on December 26, 2020, and entitled "MESSAGE FILTERING METHOD AND APPARATUS".

### TECHNICAL FIELD

This disclosure relates to the field of the Internet of Vehicles, and the invention in particular relates to a message filtering method and apparatus as well as a computer-readable storage medium.

### BACKGROUND

As vehicles in operation continuously increase, a road capacity is gradually saturated, leading to increasingly prominent problems such as traffic congestion and traffic accidents. An exchange and sharing of intelligent information between vehicles and X (people, vehicles, roads, clouds, and the like) can be implemented based on an Internet of Vehicles (Internet of Vehicle, IOV) technology. In this way, vehicles can obtain traffic information, security warning information, and the like in a timely manner, thereby effectively easing traffic congestion, avoiding traffic accidents, and reducing a traffic safety risk to some extent.

With the development of the intelligent Internet of Vehicles, requirements for long term evolution (Long Term Evolution, LTE) based V2X (Vehicle to Everything) unicast services are gradually increasing, such as a vehicle near-field payment and vehicle identity identification. A V2I (Vehicle to Infrastructure) unicast establishment process is used as an example. A roadside unit (Roadside Unit, RSU) periodically broadcasts a unicast service announcement (for example, a service establishment invitation) to notify a surrounding vehicle. After receiving the unicast service announcement, the surrounding vehicle needs to perform a parsing operation, for example, signature verification, on the unicast service announcement, and to establish, based on an actual service requirement, a unicast connection that is based on the unicast service announcement and that is to the RSU.

Because the unicast service announcement is periodically sent, the vehicle that already establishes the unicast connection to the RSU still repeatedly receives and parses the unicast service announcement broadcast by the RSU, thereby greatly consuming computing resources of the vehicle, and decreasing message processing efficiency.

WO 2020/224412 A1 relates to a communication method and a device. The method comprises a sending end that determines a layer 2 address pair of the first V2X service according to the frequency band of the first V2X service. The layer 2 address pair of the first V2X service includes a source layer 2 address of the first V2X service and a destination layer 2 address of the first V2X service. The layer 2 address pair of the first V2X service corresponds to the frequency band of the first V2X service. The sending end sends the data of the first V2X service to the receiving end through the frequency band of the first V2X service according to the layer 2 address pair of the first V2X service.

US 2020/314613 A1 relates to a method of performing unicast communication performed by a first user equipment (UE). The method includes transmitting a direct communication request message, generating a profile for a PC5 unicast link, and receiving, from a second UE, a response message based on a result of the establishment of the PCS unicast link. The method also includes transmitting, to the second UE, a data message over the PCS unicast link based on the response message. The profile includes at least one of a Layer-2 identifier (ID) of the first UE, an application layer ID of the first UE, a Layer-2 ID of the second UE, an application layer ID of the second UE, PC5 5" generation (5G) Quality of Service (QoS) Indicator (PQI), or PCS QoS Flow identifier (PFI) associated with the PQI.

US 2019/349730 A1 relates to a method for transmitting V2X data to a second UE in a wireless communication system, by a first-user equipment (UE). The method comprises broadcasting, receiving and transmitting. The first UE broadcasts a direct communication request message. The direct communication accept message from the second UE receives the direct communication request message, in a unicast manner. Finally, the data of a V2X service is transmitted to the second UE in a unicast manner. A source layer-2 identity (ID) included in the broadcast direct communication request message is used as a destination layer-2 ID of the direct communication accept message for unicast reception of the data of the V2X service by the second UE.

### SUMMARY

The object of the present invention is to provide a message filtering method and apparatus as well as a computer-readable storage medium, so that a terminal can filter repeatedly received messages that are sent by a same device and that indicate a same application service, thereby effectively reducing computing resources consumed by the terminal, and increasing message processing efficiency. This object is solved by the attached independent claims, and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the claimed invention or its embodiments.

According to a first aspect of the invention, the invention provides a message filtering method, applied to a first terminal, and including: establishing, by the first terminal, a first unicast connection to a third terminal, and storing, by the first terminal, a mapping relationship between a first identity and a first application identifier based on the first unicast connection, where the first identity is a unique identifier of the third terminal, the first application identifier is an identifier of an application service provided by the third terminal, and the method includes: receiving a first message broadcast by a second terminal, where the first message includes a second identity and a second application identifier, the second identity is a unique identifier of the second terminal, and the second application identifier is an identifier of an application service provided by the second terminal; and when the second identity is the same as the first identity and the second application identifier matches the first application identifier, refusing, by the first terminal, to establish a second unicast connection to the second terminal.

In the foregoing method, when a mapping relationship between the second identity and the second application identifier that correspond to the first message is the same as the mapping relationship between the first identity and the first application identifier that correspond to the first unicast connection established by the first terminal, the first terminal discards the first message, and does not establish the second unicast connection to the second terminal. In this way, the terminal filters repeatedly received messages that are sent by a same device and that indicate a same application service, thereby effectively reducing computing resources consumed by the terminal, and increasing message processing efficiency.

In a possible implementation of the first aspect, the first identity is a media access control MAC address of the third terminal, the second identity is a MAC address of the second terminal, the first application identifier includes at least one of an identifier of a first application or a mapping value of the identifier of the first application, and the second application identifier includes at least one of an identifier of a second application or a mapping value of the identifier of the second application.

During implementation of the foregoing implementation, the first identity uniquely represents the third terminal, the second identity uniquely represents the second terminal, the first application identifier uniquely represents the first application provided by the third terminal, and the second application identifier uniquely represents the second application provided by the second terminal. Therefore, whether the second terminal is the same as the third terminal may be determined by comparing whether the second identity is the same as the first identity, and whether the second application is the same as the first application may be determined by comparing whether the second application identifier is the same as the first application identifier. This helps the first terminal filter repeatedly received messages that are sent by a same device and that indicate a same application service, thereby effectively reducing computing resources consumed by the terminal.

In a possible implementation of the first aspect, when the first application identifier is the identifier of the first application and the second application identifier is the identifier of the second application, that the second application identifier matches the first application identifier means that the identifier of the second application is the same as the identifier of the first application.

During implementation of the foregoing implementation, on a premise that the second terminal is the same as the third terminal, if the identifier of the second application is the same as the identifier of the first application, it indicates that the second terminal and the third terminal further provide a same application service. In this case, the first terminal can directly filter the first message, thereby effectively reducing computing resources consumed by the terminal, and increasing message processing efficiency.

In a possible implementation of the first aspect, when the first application identifier is the mapping value of the identifier of the first application and the second application identifier is the mapping value of the identifier of the second application, that the second application identifier matches the first application identifier means that the mapping value of the identifier of the second application is the same as the mapping value of the identifier of the first application.

During implementation of the foregoing implementation, on a premise that the second terminal is the same as the third terminal, if the mapping value of the identifier of the second application is the same as the mapping value of the identifier of the first application, it indicates that the second terminal and the third terminal further provide a same application service. In this case, the first terminal can directly filter the first message, thereby effectively reducing computing resources consumed by the terminal, and increasing message processing efficiency.

In a possible implementation of the first aspect, when the first application identifier includes the identifier of the first application and the mapping value of the identifier of the first application, and the second application identifier includes the identifier of the second application and the mapping value of the identifier of the second application, that the second application identifier matches the first application identifier means that the identifier of the second application is the same as the identifier of the first application, and that the mapping value of the identifier of the second application is the same as the mapping value of the identifier of the first application.

During implementation of the foregoing implementation, on a premise that the second terminal is the same as the third terminal, if the identifier of the second application is the same as the identifier of the first application, and the mapping value of the identifier of the second application is the same as the mapping value of the identifier of the first application, it indicates that the second terminal and the third terminal further provide a same application service. In this case, the first terminal can directly filter the first message, thereby effectively reducing computing resources consumed by the terminal, and increasing message processing efficiency.

In a possible implementation of the first aspect, the first message further includes an identification area, the identification area is used to indicate a service range of the second application supported by the second terminal, and the method further includes: when the second identity is different from the first identity or the second application identifier does not match the first application identifier, obtaining the identification area; and when the first terminal is not located in the identification area, refusing, by the first terminal, to establish the second unicast connection to the second terminal.

During implementation of the foregoing implementation, when the second terminal is different from the third terminal, or the second application provided by the second terminal is different from the first application provided by the third terminal, the first message needs to be parsed to obtain the identification area. If the first terminal is not located in the identification area, it indicates that the first terminal currently does not fall within the service range of the second application supported by the second terminal. Therefore, the first message is unrelated to the first terminal, and the first terminal can directly filter the first message, thereby increasing message processing efficiency.

In a possible implementation of the first aspect, when the second identity is different from the first identity, or the second application identifier does not match the first application identifier, and the first terminal is located in the identification area, in response to the first message, the first terminal may further establish the second unicast connection to the second terminal, and stores a mapping relationship between the second identity and the second application identifier.

During implementation of the foregoing implementation, when the second terminal is different from the third terminal, or the second application provided by the second terminal is different from the first application provided by the third terminal, and the first terminal is located in a service range of the second application supported by the second terminal, in response to the first message, the first terminal establishes the second unicast connection to the second terminal, and stores the mapping relationship between the second identity and the second application identifier that are based on the second unicast connection, thereby implementing quick establishment of the unicast connection and increasing unicast interaction efficiency.

In a possible implementation of the first aspect, after the first terminal establishes the second unicast connection to the second terminal, when the first terminal is no longer located in the identification area, the first terminal deletes the stored mapping relationship between the second identity and the second application identifier.

During implementation of the foregoing implementation, after establishment of the second unicast connection is completed, if the first terminal is no longer located in the service range of the second application supported by the second terminal, the first terminal needs to delete the mapping relationship between the second identity and the second application identifier that correspond to the second unicast connection. Therefore, when the first terminal is located in the service range of the second application again, the received first message can be prevented from being incorrectly filtered.

In a possible implementation of the first aspect, the mapping relationship between the first identity and the first application identifier is stored in mapping information.

In a possible implementation of the first aspect, the mapping information is stored at a network layer or a message layer of the first terminal.

During implementation of the foregoing implementation, when the mapping information is stored at the network layer of the first terminal, the mapping information is established and maintained by the network layer by using a cross-layer primitive, and the first message is filtered based on the network layer, thereby effectively avoiding consumption of an upper-layer resource in the first terminal. When the mapping information is stored at the message layer of the first terminal, the mapping information is directly established and maintained by the message layer, and the cross-layer primitive does not need to be used. An operation is simple.

In a possible implementation of the first aspect, the second identity is a source layer 2 identifier in the first message, the identifier of the second application is an application identifier in the first message, and the mapping value of the identifier of the second application is a destination layer 2 identifier in the first message.

During implementation of the foregoing implementation, the second identity may be a field, that is, the source layer 2 identifier, of the first message, the identifier of the second application may be a field, that is, the application identifier in the first message, and the mapping value of the identifier of the second application may be a field, that is, the destination layer 2 identifier, of the first message.

In a possible implementation of the first aspect, the first message is a unicast service announcement, and the first message is carried by a dedicated service announcement DSA.

In a possible implementation of the first aspect, the second terminal is a roadside unit RSU or an on-board unit OBU.

During implementation of the foregoing implementation, efficiency of a unicast interaction between the first terminal and the roadside unit RSU may be increased, or efficiency of a unicast interaction between the first terminal and the on-board unit OBU may be increased.

According to a second aspect of the invention, the invention also provides a message filtering apparatus, where the apparatus establishes a first unicast connection to a third terminal, and stores a mapping relationship between a first identity and a first application identifier based on the first unicast connection, where the first identity is a unique identifier of the third terminal, the first application identifier is an identifier of an application service provided by the third terminal, and the apparatus includes: a receiving unit, configured to receive a first message broadcast by a second terminal, where the first message includes a second identity and a second application identifier, the second identity is a unique identifier of the second terminal, and the second application identifier is an identifier of an application service provided by the second terminal; and a processing unit, configured to: when the second identity is the same as the first identity and the second application identifier matches the first application identifier, refuse to establish a second unicast connection to the second terminal.

The first identity is a media access control MAC address of the third terminal, the second identity is a MAC address of the second terminal, the first application identifier includes at least one of an identifier of a first application or a mapping value of the identifier of the first application, and the second application identifier includes at least one of an identifier of a second application or a mapping value of the identifier of the second application.

In a possible not-claimed implementation of the second aspect, when the first application identifier is the identifier of the first application and the second application identifier is the identifier of the second application, that the second application identifier matches the first application identifier means that the identifier of the second application is the same as the identifier of the first application.

In a possible not-claimed implementation of the second aspect, when the first application identifier is the mapping value of the identifier of the first application and the second application identifier is the mapping value of the identifier of the second application, that the second application identifier matches the first application identifier means that the mapping value of the identifier of the second application is the same as the mapping value of the identifier of the first application.

In a possible not-claimed implementation of the second aspect, when the first application identifier includes the identifier of the first application and the mapping value of the identifier of the first application, and the second application identifier includes the identifier of the second application and the mapping value of the identifier of the second application, that the second application identifier matches the first application identifier means that the identifier of the second application is the same as the identifier of the first application, and that the mapping value of the identifier of the second application is the same as the mapping value of the identifier of the first application.

In a possible not-claimed implementation of the second aspect, the first message further includes an identification area, the identification area is used to indicate a service range of the second application supported by the second terminal, and the processing unit is further configured to: when the second identity is different from the first identity, or the second application identifier does not match the first application identifier, obtain the identification area; and when the apparatus is not located in the identification area, refuse to establish the second unicast connection to the second terminal.

In a possible not-claimed implementation of the second aspect, the processing unit is further configured to: when the second identity is different from the first identity, or the second application identifier does not match the first application identifier, and the apparatus is located in the identification area, in response to the first message, establish the second unicast connection, and store a mapping relationship between the second identity and the second application identifier.

In a possible not-claimed implementation of the second aspect, the processing unit is further configured to: after establishing the second unicast connection, when the apparatus is no longer located in the identification area, delete the stored mapping relationship between the second identity and the second application identifier.

In a possible not-claimed implementation of the second aspect, the mapping relationship between the first identity and the first application identifier is stored in mapping information.

In a possible not-claimed implementation of the second aspect, the mapping information is stored at a network layer or a message layer of the apparatus.

In a possible not-claimed implementation of the second aspect, the second identity is a source layer 2 identifier in the first message, the identifier of the second application is an application identifier in the first message, and the mapping value of the identifier of the second application is a destination layer 2 identifier in the first message.

In a possible not-claimed implementation of the second aspect, the first message is a unicast service announcement, and the first message is carried by a dedicated service announcement DSA.

In a possible not-claimed implementation of the second aspect, the second terminal is a roadside unit RSU or an on-board unit OBU.

According to a third not-claimed aspect, an embodiment of this application provides a message filtering apparatus. The apparatus includes a processor and a memory. Computer program instructions are stored in the memory, and the processor runs the computer program instructions, so that the apparatus performs the method in any one of the first aspect or the possible implementations of the first aspect.

According to a fourth aspect of the invention, the invention provides a computer-readable storage medium. Program code executed by an apparatus is stored in the computer-readable storage medium, and the program code includes instructions used to perform the method in any one of the first aspect or the possible implementations of the first aspect.

According to a fifth not-claimed aspect, an embodiment of this application provides a computer program product. When the computer program product runs on a processor, a message filtering apparatus is enabled to perform the method in any one of the first aspect or the possible embodiments of the first aspect. The computer program product may be a software installation package. When the method provided in any one of the possible designs of the first aspect needs to be used, the computer program product may be downloaded and executed on the apparatus, to implement the method in any one of the first aspect or the possible embodiments of the first aspect.

### BRIEF DESCRIPTION OF DRAWINGS

To describe technical solutions in embodiments of this application more clearly, the following briefly describes the accompanying drawings for describing embodiments. It is clear that the accompanying drawings in the following descriptions show merely some embodiments of this application, and a person of ordinary skill in the art may still derive other drawings from these accompanying drawings without creative efforts.
FIG. 1 is an architectural diagram of a communication system of the Internet of Vehicles;
FIG. 2 is a schematic diagram of a protocol stack of the Internet of Vehicles;
FIG. 3 is a schematic diagram of an application scenario;
FIG. 4 is a flowchart of a message filtering method according to an embodiment of this application;
FIG. 5A is a schematic diagram of a protocol stack of an OBU according to an embodiment of this application;
FIG. 5B is a schematic diagram of another protocol stack of an OBU according to an embodiment of this application;
FIG. 6 is a flowchart of another message filtering method according to an embodiment of this application;
FIG. 7 is a schematic diagram of an application scenario according to an embodiment of this application;
FIG. 8 is a flowchart of still another message filtering method according to an embodiment of this application;
FIG. 9 is a schematic diagram of another application scenario according to an embodiment of this application;
FIG. 10 is a schematic diagram of a structure of a computing apparatus according to an embodiment of this application; and
FIG. 11 is a schematic diagram of a function structure of a computing apparatus according to an embodiment of this application.

### DESCRIPTION OF EMBODIMENTS

Terms used in the embodiments of this application are merely for the purpose of describing specific embodiments, but are not intended to limit this application. In this specification and claims in the embodiments of this application, the terms "first", "second", and the like are intended to distinguish between different objects, but do not indicate a particular sequence of the objects.

The following describes technical solutions of this application with reference to accompanying drawings.

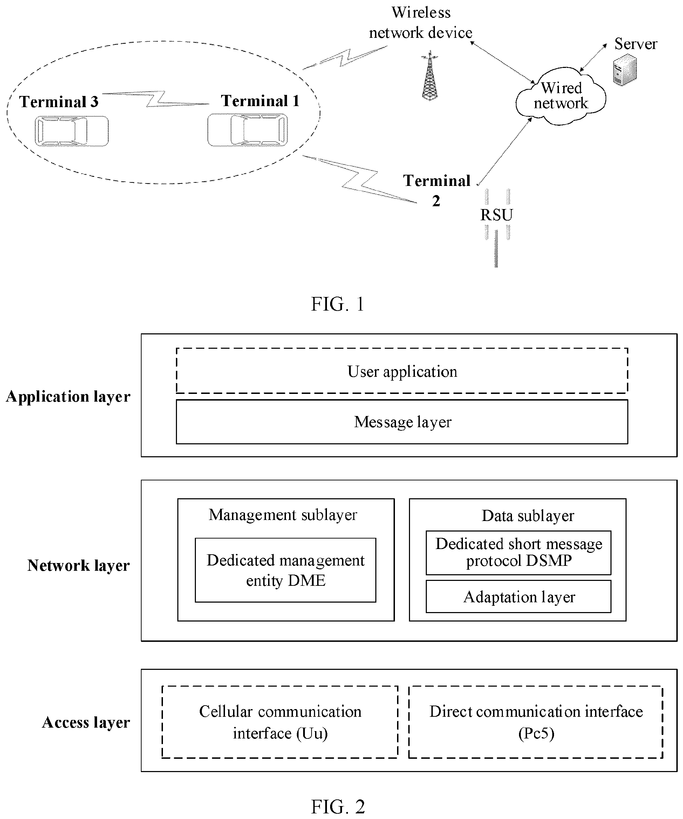

FIG. 1 is an architectural diagram of a communication system of the Internet of Vehicles. The communication system includes at least a plurality of terminals, and any two of the plurality of terminals may wirelessly communicate with each other. The terminals in this application may include, but are not limited to, an on-board unit (On-Board Unit, OBU), an RSU, a mobile phone, a tablet computer, a computer with a wireless transceiver function, a smart gas station, a smart signal light, and the like. Messages may be transmitted between the terminals by using different types of communication interfaces, such as a PC5 interface and/or a Uu interface.

For the plurality of terminals, a terminal 1 and a terminal 2 are used as an example. The terminal 1 may be an OBU, the terminal 2 may be an RSU, and the terminal 1 and the terminal 2 may wirelessly communicate with each other. The RSU periodically broadcasts a first message, and the first message carries an application identifier. After receiving the first message, if needing to establish a unicast connection corresponding to the first message to the RSU, the OBU establishes the unicast connection between the OBU and the RSU in response to the first message.

In a specific implementation, as shown in FIG. 1, the plurality of terminals further include a terminal 3, the terminal 1 may be an OBU 1, the terminal 3 may be an OBU 2, and the terminal 2 may be an RSU. In this case, the RSU periodically broadcasts the first message. If both the OBU 1 and the OBU 2 fall within a broadcast communication range of the RSU, each of the OBU 1 and the OBU 2 can receive the first message, and may determine, based on a service requirement of each of the OBU 1 and the OBU 2, whether to establish the unicast connection corresponding to the first message to the RSU. If the unicast connection to the RSU does not need to be established, a subsequently received first message is filtered. Filtering the first message means discarding or ignoring the first message. In other words, being not in response to the first message is essentially refusing to repeatedly establish the unicast connection corresponding to the first message to a sender of the first message. It should be noted that the first message may be a unicast service announcement, and the first message may be carried by a dedicated service announcement (Dedicated Service Advertisement, DSA).

In a specific implementation, the terminal 3 may also broadcast the first message. For example, it is assumed that the terminal 2 is an RSU, the terminal 1 is an OBU 1, and the terminal 3 is an OBU 2. In this case, it is assumed that the OBU 2 periodically broadcasts the first message, and each of the OBU 1 and the RSU receives the first message. In this way, the RSU filters the first message after performing determining based on a field (for example, an application identifier) in the first message, and the OBU 1 determines, after performing determining based on a field (for example, an application identifier) in the first message, to establish the unicast connection corresponding to the first message to the OBU 2.

In some possible embodiments, the system further includes a wireless network device, a wired network, and a server. The terminal may communicate with the server by using the wired network or the wireless network device. For example, the terminal may receive a first message broadcast by the server, and the terminal may determine, based on a field (for example, an application identifier) in the first message, whether to filter the first message or to respond to the first message, that is, whether to establish the unicast connection corresponding to the first message to the server.

The wireless network device may be a network device in a 2G, 3G, 4G, 5G, or future communication system, and includes a plurality of cell towers (only one is shown) and any other networking components for connecting the wireless network device to a wired network.

The wired network may be a conventional wired communication network that connects the wireless network device and the terminal (for example, an RSU) to the server. One or more parts of the wired network can be implemented by using a standard wired network, an optical fiber or another optical network, a cable network, a power line, and any combination thereof.

The server may be a service center computer, a V2X application server, an Internet of Things (Internet of Thing, IoT) application server, a public safety service application server, an unmanned aerial vehicle server (such as an unmanned aerial vehicle supervision enablement server or an unmanned aerial vehicle application service server), a V2X application enabler (V2X Application Enabler, VAE) server, or the like. This is not specifically limited in this application.

It should be noted that the communication system shown in FIG. 1 may be a 3rd Generation Partnership Project (3rd Generation Partnership Project, 3GPP) communication system, for example, a long term evolution (Long Term Evolution, LTE) system, may be a 5th Generation (5th Generation, 5G) mobile communication system or a new radio (New Radio, NR) system, or may be a non-3GPP communication system. This is not specifically limited in this application.

It should be noted that FIG. 1 is merely an example of the architectural diagram, but a quantity of network elements included in the communication system shown in FIG. 1 is not limited. In addition to the network functional entities shown in FIG. 1, the network shown in FIG. 1 may further include another functional entity, although the another functional entity is not shown in FIG. 1. In addition, the method provided in this embodiment of this application may be applied to the communication system shown in FIG. 1. Certainly, the method provided in this embodiment of this application may also be applied to another communication system. This is not limited in this embodiment of this application.

Specifically, the terminal may establish a protocol stack shown in FIG. 2, and an interaction may be performed between terminals or between the terminal and a network-side device based on a protocol stack shown in FIG. 2. FIG. 2 is a schematic diagram of a protocol stack of the Internet of Vehicles.

The protocol stack includes an application layer, a network layer, and an access layer. The application layer is mainly used to process application layer service logic of an application service, for example, generate an instant message and a unicast service announcement. The application layer includes a user application and a message layer. The message layer is located inside the application layer. The message layer connects to a data sublayer downwards and supports a specific user application upwards. The message layer may support transmission of various types of data defined by a network layer of an LTE-based Internet of Vehicles wireless communication technology. An interaction between the message layer and the data sublayer inside the network layer is implemented by using a cross-layer primitive (also referred to as an operation primitive or a service primitive).

The network layer includes a management sublayer and a data sublayer, the management sublayer is used to provide functions such as system configuration and maintenance for the terminal, the management sublayer may be a dedicated management entity (Dedicated Management Entity, DME), and the DME provides a management interface for all entities of the data sublayer. The data sublayer includes an adaptation layer, a DSMP layer, and the like. The DSMP layer is used to perform a data interaction with different applications. The adaptation layer is used to provide a function of transmission adaptation between an underlying access layer and an upper-layer protocol stack. For example, an underlying interface used for a to-be-sent data packet (such as a DSMP data packet or an IP data packet) is distinguished, and a corresponding data packet is transferred to a corresponding interface of the access layer for transmission. A function of the adaptation layer further includes establishing mapping between an application identifier and a destination layer 2 identifier, generation, change, or maintenance of a source layer 2 identifier, and the like. The data sublayer transmits a data stream between application layers, a data stream between different device management layer entities, or a data stream between a management layer entity and an application.

The access layer supports a cellular communication interface (for example, a Uu interface) and/or a direct communication interface (for example, a PC5 interface). The PC5 interface and the Uu interface may support different radio access technologies (Radio Access Technology, RAT). For example, the RAT may include an LTE technology or an NR technology.

To reduce computing resources of an OBU that are consumed in a unicast establishment process and optimize information processing efficiency, a unicast service announcement broadcast by a roadside unit RSU may be filtered on an OBU side. Currently, the network layer of the LTE-based V2X supports only filtering of the unicast service announcement based on an application identifier (Application Identifier, AID). Specifically, after the OBU receives the unicast service announcement from the RSU, the OBU may filter a message of a specific type based on the AID because a dedicated short message service protocol (Dedicated Short Message Protocol, DSMP) data packet header of the network layer includes the AID, and different applications correspond to different AIDs. For example, an AID of a conventional basic safety message (Basic Safety Message, BSM) of an emergency vehicle is 113, and an AID of static roadside information (Road Side Information, RSI) is 3620.

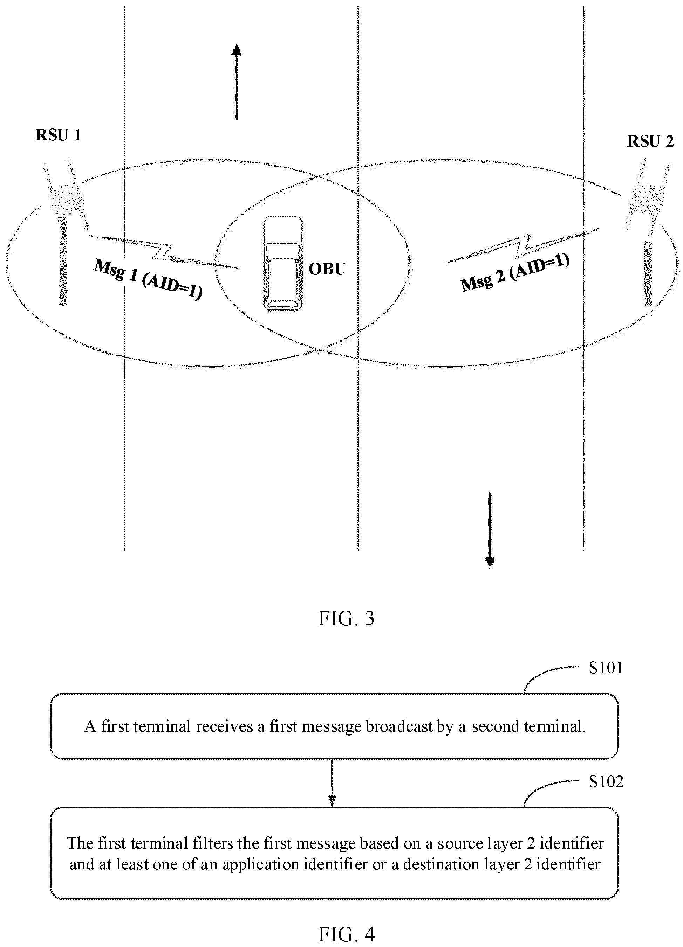

An RSU device is generally deployed on a roadside, and the OBU may fall within broadcast ranges of a plurality of RSU devices that provide a same application service (for example, highway toll collection). For example, FIG. 3 is a schematic diagram of an application scenario. On a highway, one RSU device is separately deployed on an uplink road and a downlink road. In other words, an RSU 1 is disposed on the uplink road, and an RSU 2 is disposed on the downlink road, to communicate with OBUs in different driving directions. The RSU 1 and the RSU 2 respectively communicate with the OBUs wirelessly. It can be seen from FIG. 3 that, the RSU 1 periodically broadcasts a Msg 1, and the RSU 2 periodically broadcasts a Msg 2. An application identifier of the Msg 1 is the same as an application identifier of the Msg 2. Therefore, the AID of the Msg 1 is the same as the AID of the Msg 2. For example, both the AIDs are 1. Because the OBU is currently located in both a communication range of the RSU 1 and a communication range of the RSU 2, the OBU may receive the Msg 1 and the Msg 2.

It is assumed that, after receiving the Msg 1 broadcast by the RSU 1 and establishing a unicast connection to the RSU 1, the OBU further receives the Msg 2 sent by the RSU 2 and the Msg 1 broadcast again by the RSU 1. If a message is filtered in the foregoing AID-based manner, although the Msg 1 sent again by the RSU 1 may be filtered, because the AID of the Msg 1 is the same as the AID of the Msg 2, the Msg 2 broadcast by the RSU 2 is also directly filtered. Consequently, the OBU cannot establish a unicast connection to the RSU 2.

Therefore, it can be seen that, if a message is filtered on an OBU side only based on an AID, the OBU possibly cannot establish a unicast connection to another to-be-connected RSU due to incorrect filtering. If no message is filtered at an OBU end, an application layer of the OBU continuously processes unicast service announcements received from RSUs, such as message signature verification or decoding, thereby occupying a large quantity of computing resources and decreasing message processing efficiency.

This application provides a message filtering method, to effectively filter broadcast messages that are for applications of a same type and that are sent by a terminal that already establishes a unicast connection to an OBU, thereby reducing computing resources consumed by the OBU, and increasing message processing efficiency of the OBU.

Based on the foregoing existing problem, this application proposes a message filtering method. When a second terminal periodically broadcasts a first message, after receiving the first message, a first terminal performs determining and analysis based on a field (for example, at least one of an application identifier or a destination layer 2 identifier) that is related to an application service and that is in the first message and a source layer 2 identifier in the first message, so that when the second terminal already establishes a unicast connection corresponding to the first message to the first terminal, messages that are broadcast by the second terminal and that indicate that a same application service is provided are filtered. FIG. 4 is a flowchart of a message filtering method according to an embodiment of this application. The method includes, but is not limited to, the following steps.

S101: A first terminal receives a first message broadcast by a second terminal.

In this embodiment of this application, the second terminal periodically broadcasts the first message. The first message includes a source layer 2 identifier, and the first message further includes at least one of an application identifier or a destination layer 2 identifier. The source layer 2 identifier may also be referred to as an identity, and is a unique identifier of the second terminal. Both the application identifier and the destination layer 2 identifier are related to an application service, and the destination layer 2 identifier corresponds to the application identifier. Therefore, each of the application identifier and the destination layer 2 identifier may be used to indicate an identifier of an application service provided by the second terminal.

In a specific implementation, application identifiers (Application Identifier, AID) are used to distinguish between different applications. In other words, the AIDs may be used to distinguish between different application layer services. The source layer 2 identifier (Source Layer 2 ID) is a MAC address of the second terminal, and the source layer 2 identifier is used to indicate a sender of the first message, that is, the second terminal. Because the second terminal sends the first message in a broadcast manner, the destination layer 2 identifier (Destination Layer 2 ID) in this application is a mapping value of the application identifier, and the destination layer 2 identifier is in a one-to-one correspondence with the application identifier.

It should be noted that the first message may be a unicast service announcement, and the first message is carried by a DSA.

The first terminal may be any one of an OBU, an RSU, a mobile phone, a computer with a wireless transceiver function, a smart gas station, and the like. The second terminal is a device that may communicate with the first terminal and has a message broadcast capability. The second terminal includes, but is not limited to, an OBU, an RSU, a mobile phone, a computer with a wireless transceiver function, a smart gas station, a smart signal light, a tablet computer, and the like.

It should be noted that, in this embodiment of this application, different terminals have different source layer 2 identifiers (or identities). In other words, if identities of two terminals are the same, it indicates that the two terminals are the same. For example, an identity is a MAC address. MAC addresses of different terminals are different, and conflict of MAC addresses does not exist between the different terminals. If two terminals have the same MAC address, it indicates that the two terminals are the same. In S101, the first terminal receives the first message broadcast by the second terminal. It may be understood that an identity of the first terminal is different from an identity of the second terminal.

S102: The first terminal filters the first message based on the source layer 2 identifier and at least one of the application identifier or the destination layer 2 identifier.

In this embodiment of this application, after receiving the first message, the first terminal may combine three fields: the application identifier, the source layer 2 identifier, and the destination layer 2 identifier that are in the first message, to determine whether to filter the first message. Specifically, the first terminal may determine, based on the combined fields, whether a unicast connection corresponding to the first message is established, and filter the first message when the unicast connection corresponding to the first message is established. There are mainly three combination manners: the application identifier and the source layer 2 identifier; the destination layer 2 identifier and the source layer 2 identifier; and the application identifier, the source layer 2 identifier, and the destination layer 2 identifier.

It should be noted that, that the first terminal filters the first message means that the first terminal ignores or discards the first message, and does not need to perform parsing processing such as signature verification or decoding on the first message, and that the first terminal refuses to establish the unicast connection corresponding to the first message to the second terminal. Therefore, computing resources consumed by the first terminal are greatly reduced, and message processing efficiency is increased.

When determining whether to filter the first message, the first terminal may further depend on mapping information. The mapping information records a mapping relationship among the application identifier, the source layer 2 identifier, and the destination layer 2 identifier that correspond to the unicast connection currently established by the first terminal. In a specific implementation, the mapping information may be stored at a message layer of the first terminal. In other words, the mapping information is established and maintained by the message layer of the first terminal. In another specific implementation, the mapping information may be stored at a network layer of the first terminal. In other words, the mapping information is established and maintained by the network layer of the first terminal.

The mapping information may be similar to a mapping relationship table shown in Table 1. As shown in Table 1, Table 1 records two mapping relationships: aid1-mac3-f(aid1) and aid3-mac4-f(aid3). Aid1-mac3-f(aid1) is used as an example for description. It is assumed that mac3 is a MAC address of a sender, that is, a third terminal, for a message, aid1 is an identifier of a first application provided by the third terminal, f(aid1) indicates a mapping value corresponding to the application identifier aid1 in the message, and f() is a mapping function. The mapping relationship aid1-mac3-f(aid1) exists in the mapping relationship table, indicating that the first terminal already establishes a unicast connection that is based on the first application and that is to the third terminal. Similarly, in aid3-mac4-f(aid3), it is assumed that mac4 is a MAC address of a fourth terminal, aid3 is an identifier of a third application, aid3 is unequal to aid1, in other words, the third application is different from the first application, mac4 is unequal to mac3, in other words, the fourth terminal is different from the third terminal, and f(aid3) is a mapping value of an identifier of the third application. The mapping relationship aid3-mac4-f(aid3) exists in the mapping relationship table, indicating that the first terminal already establishes a unicast connection that is based on the third application and that is to the fourth terminal.

**Table 1**

| Local application index | Application identifier | Source layer 2 identifier | Destination layer 2 identifier |
|---|---|---|---|
| LocalApplicationIndex | AID | Source layer 2 ID | Destination layer 2 ID |
| 1 | aid1 | mac3 | f(aid1) |
| 2 | aid3 | mac4 | f(aid3) |
| ... | ... | ... | ... |

The following sequentially describes, based on the mapping information, determining manners corresponding to the foregoing three combination manners.

A first combination manner is determining, based on the application identifier and the source layer 2 identifier, whether to filter the first message.

Specifically, it is determined whether a first mapping relationship between the application identifier and the source layer 2 identifier that are in the first message exists in the mapping information. If the first mapping relationship exists in the mapping information, it is determined that the first terminal already establishes the unicast connection corresponding to the first message to the second terminal, and the first message is filtered when it is determined that the unicast connection corresponding to the first message is established. If the first mapping relationship does not exist in the mapping information, it indicates that the first terminal does not establish the unicast connection corresponding to the first message to the second terminal. When it is determined that the unicast connection corresponding to the first message is not established, in response to the first message, the first terminal establishes the unicast connection corresponding to the first message to the second terminal.

A second combination manner is determining, based on the destination layer 2 identifier and the source layer 2 identifier, whether to filter the first message.

Specifically, it is determined whether a second mapping relationship between the destination layer 2 identifier and the source layer 2 identifier that are in the first message exists in the mapping information. If the second mapping relationship exists in the mapping information, it is determined that the first terminal already establishes the unicast connection corresponding to the first message to the second terminal, and the first message is filtered when it is determined that the unicast connection corresponding to the first message is established. If the second mapping relationship does not exist in the mapping information, it indicates that the first terminal does not establish the unicast connection corresponding to the first message to the second terminal. When it is determined that the unicast connection corresponding to the first message is not established, in response to the first message, the first terminal may establish the unicast connection corresponding to the first message to the second terminal.

A third combination manner is determining, based on the application identifier, the destination layer 2 identifier, and the source layer 2 identifier, whether to filter the first message.

Specifically, it is determined whether a third mapping relationship among the application identifier, the destination layer 2 identifier, and the source layer 2 identifier that are in the first message exists in the mapping information. If the third mapping relationship exists in the mapping information, it is determined that the first terminal already establishes the unicast connection corresponding to the first message to the second terminal, and the first message is filtered when it is determined that the unicast connection corresponding to the first message is established. If the third mapping relationship does not exist in the mapping information, it indicates that the first terminal does not establish the unicast connection corresponding to the first message to the second terminal. When it is determined that the unicast connection corresponding to the first message is not established, in response to the first message, the first terminal may establish the unicast connection corresponding to the first message to the second terminal.

Being in response to the first message means that the first terminal sends a MAC address of the first terminal to the second terminal, so that the first terminal establishes the unicast connection corresponding to the first message to the second terminal, and that the first terminal adds the mapping relationship among the application identifier, the source layer 2 identifier, and the destination layer 2 identifier that are in the first message to the mapping information. It should be noted that, after the first terminal establishes the unicast connection corresponding to the first message to the second terminal, the first terminal may perform a unicast interaction with the second terminal based on the unicast connection, to perform a service transaction corresponding to the application identifier, such as a payment service, vehicle identity identification, or a safety reminder service.

The foregoing first combination manner is used as an example, and a determining process in the first combination manner is described with reference to Table 1. If the application identifier in the first message is aid2, aid2 is an identifier of a second application, the source layer 2 identifier in the first message is mac2, mac2 represents the second terminal, and aid2-mac2 is sequentially compared with mapping relationships corresponding to all established unicast connections in Table 1. For example, aid2-mac2 corresponding to the first message is first compared with aid1-mac3 in Table 1. If aid2 is different from aid1 (it indicates that the second application is different from the first application), or if mac2 is different from mac3 (it indicates that the second terminal is different from the third terminal), it indicates that a mapping relationship aid2-mac2 is different from a mapping relationship aid1-mac3 in Table 1, and aid2-mac2 is further compared with aid3-mac4 in Table 1. If aid2 is different from aid3 (it indicates that the second application is different from the third application), or mac2 is different from mac4 (it indicates that the second terminal is different from the fourth terminal), it indicates that the mapping relationship aid2-mac2 is different from a mapping relationship aid3-mac4 in Table 1. Therefore, it may be determined that the mapping relationship aid2-mac2 does not exist in Table 1, that is, the first terminal does not establish the unicast connection that is based on the second application and that is to the second terminal. In other words, the first terminal does not establish the unicast connection corresponding to the first message to the second terminal.

For another example, in a process of sequentially comparing aid2-mac2 corresponding to the first message and the mapping relationships corresponding to all the established unicast connections in Table 1, for aid2-mac2 and aid3-mac4 in Table 1, if aid2 is different from aid3 (it indicates that the second application is different from the third application), or mac2 is different from mac4 (it indicates that the second terminal is different from the fourth terminal), it indicates that a mapping relationship aid2-mac2 is different from a mapping relationship aid3-mac4 in Table 1. However, for aid2-mac2 and aid1-mac3 in Table 1, if aid2 is the same as aid1 (it indicates that the second application is the same as the first application), and mac2 is the same as mac3 (it indicates that the second terminal is the same as the third terminal), it indicates that the mapping relationship aid2-mac2 is the same as a mapping relationship aid1-mac3 in Table 1. Therefore, it may be determined that aid2-mac2 already exists in Table 1, indicating that the first terminal has previously established the unicast connection corresponding to the first message to the second terminal. In this case, the first terminal may filter the first message. In other words, the first terminal refuses to establish again the unicast connection corresponding to the first message to the second terminal.

To sum up, a core idea of filtering the first message by the first terminal is summarized as follows: Before the first terminal receives the first message broadcast by the second terminal, the first terminal establishes a first unicast connection to the third terminal, and the first terminal stores a mapping relationship between a first identity and a first application identifier that correspond to the first unicast connection. In some possible embodiments, the mapping relationship between the first identity and the first application identifier is stored in the mapping information, and the mapping information is located at the network layer or the message layer of the first terminal. The first identity is a unique identifier of the third terminal, for example, a MAC address of the third terminal. The first application identifier is an identifier of an application service provided by the third terminal, and the first application identifier includes one or more of the identifier of the first application and a mapping value of the identifier of the first application. The first terminal receives the first message broadcast by the second terminal, and the first message includes a second identity and a second application identifier. The second identity is a unique identifier of the second terminal, for example, a MAC address of the second terminal. The second application identifier is the identifier of the application service provided by the second terminal, and the second application identifier includes one or more of the identifier of the second application and a mapping value of the identifier of the second application. The identity of the first terminal is different from the first identity (an identity of the third terminal), and the identity of the first terminal is different from the second identity (the identity of the second terminal). When the second identity is the same as the first identity and the second application identifier matches the first application identifier, it indicates that the second terminal is the same as the third terminal (because the second identity is the same as the first identity), and that the application service provided by the second terminal is the same as the application service provided by the third terminal (because the second application identifier is the same as the first application identifier), that is, the first terminal already establishes the unicast connection corresponding to the first message. Therefore, the first terminal may filter the first message, meaning that the first terminal refuses to establish a second unicast connection to the second terminal.

That the second application identifier matches the first application identifier includes the following three cases.

In a first case, when the second application identifier is the identifier of the second application and the first application identifier is the identifier of the first application, that the second application identifier matches the first application identifier means that the identifier of the second application is the same as the identifier of the first application. In this case, that the MAC address of the second terminal is the same as the MAC address of the third terminal (that is, the second identity is the same as the first identity) is equivalent to the related descriptions of the foregoing first combination manner: The first mapping relationship between the application identifier and the source layer 2 identifier that are in the first message exists in the mapping information. The second identity is the foregoing source layer 2 identifier, and the identifier of the second application is the foregoing application identifier.

In a second case, when the second application identifier is the mapping value of the identifier of the second application and the first application identifier is the mapping value of the identifier of the first application, that the second application identifier matches the first application identifier means that the mapping value of the identifier of the second application is the same as the mapping value of the identifier of the first application. In this case, that the MAC address of the second terminal is the same as the MAC address of the third terminal (that is, the second identity is the same as the first identity) is equivalent to the related descriptions of the foregoing second combination manner: The second mapping relationship between the destination layer 2 identifier and the source layer 2 identifier that are in the first message exists in the mapping information. The second identity is the foregoing source layer 2 identifier, and the mapping value of the identifier of the second application is the foregoing destination layer 2 identifier.

In a third case, when the second application identifier includes the identifier of the second application and the mapping value of the identifier of the second application, and the first application identifier includes the identifier of the first application and the mapping value of the identifier of the first application, that the second application identifier matches the first application identifier means that the identifier of the second application is the same as the identifier of the first application, and that the mapping value of the identifier of the second application is the same as the mapping value of the identifier of the first application. In this case, that the MAC address of the second terminal is the same as the MAC address of the third terminal (that is, the second identity is the same as the first identity) is equivalent to the related descriptions of the foregoing third combination manner: The third mapping relationship among the application identifier, the destination layer 2 identifier, and the source layer 2 identifier that are in the first message exists in the mapping information. The second identity is the foregoing source layer 2 identifier, the identifier of the second application is the foregoing application identifier, and the mapping value of the identifier of the second application is the foregoing destination layer 2 identifier.

It should be noted that the foregoing mapping information may be established and maintained by the network layer or the message layer of the first terminal. For descriptions of the network layer or the message layer, refer to the related descriptions in FIG. 2. Details are not described herein again. Therefore, there are also the following two manners in which the first terminal adds the mapping relationship among the application identifier, the source layer 2 identifier, and the destination layer 2 identifier that are in the first message to the mapping information.

### Manner A:

When the mapping information is stored at the network layer, the application layer of the first terminal indicates, by using a cross-layer primitive (or referred to as an operation primitive, a service primitive, or the like), the network layer to establish the mapping information at the network layer. For example, it is assumed that the first terminal receives the first message for the first time (therefore, the first message is not filtered), the first message carries the AID, the source layer 2 ID, and the destination layer 2 ID, and the first terminal determines to establish a unicast connection corresponding to the AID to the second terminal. In this case, the application layer of the first terminal may indicate, by using the cross-layer primitive, a DME of the network layer to add the mapping relationship among the AID, the source layer 2 ID, and the destination layer 2 ID that are in the first message to the mapping information at the network layer. First, when the first terminal serves as a user accepting a service, a syntax format of the cross-layer primitive of the first terminal is as follows:
DME-UserService.request(LocalApplicationIndex, Action, UserRequestType, Other Information).

UserService represents that the first terminal serves as the user accepting the service, LocalApplicationIndex represents a sequence number i, and Action represents an action. Because the foregoing action is addition, Action is set to Add. UserRequestType represents a user request type, and is set to Address Mapping. Other Information is set to (AID, Source Layer 2 ID, and Destination Layer 2 ID). Therefore, the cross-layer primitive for adding, by the network layer, the mapping relationship among the AID, the source layer 2 ID, and the destination layer 2 ID that are in the first message to the mapping information may be:
DME-UserService.request(i, Add, Address Mapping, (AID, Source Layer 2 ID, Destination Layer 2 ID)).

In some possible embodiments, if a mapping relationship corresponding to the application identifier in the first message needs to be deleted from the mapping information at the network layer, Action in a cross-layer primitive corresponding to deletion of the mapping relationship needs to be set to Delete. In this case, the cross-layer primitive is specifically as follows:
DME-UserService.request(i, Delete, Address Mapping, (AID, Source Layer 2 ID, Destination Layer 2 ID)).

Second, when the first terminal serves as a service provider, a syntax format of a cross-layer primitive of the first terminal is as follows:
DME-ProviderService.request(LocalApplicationIndex,Action,UserRequestType, Other Information).

ProviderService represents that the first terminal serves as the service provider. For parameters such as LocalApplicationIndex, Action, UserRequestType, and Other Information, refer to the foregoing descriptions. Details are not described herein again. It should be noted that the network layer of the first terminal may set Action to Add or Delete based on an actual requirement. An example in which Action is set to Add is used. If the first terminal serves as the service provider, when the network layer of the first terminal needs to add, to the mapping information, the mapping relationship among the AID, the source layer 2 ID, and the destination layer 2 ID that are in the first message, a corresponding cross-layer primitive is:
DME-ProviderService.request(i, Delete, Address Mapping, (AID, Source Layer 2 ID, Destination Layer 2 ID)).

It should be noted that if the mapping information is stored at the network layer, the network layer of the first terminal may filter the first message in any one of the foregoing three combination manners and based on the mapping information, thereby effectively avoiding consumption of upper-layer resources in the first terminal.

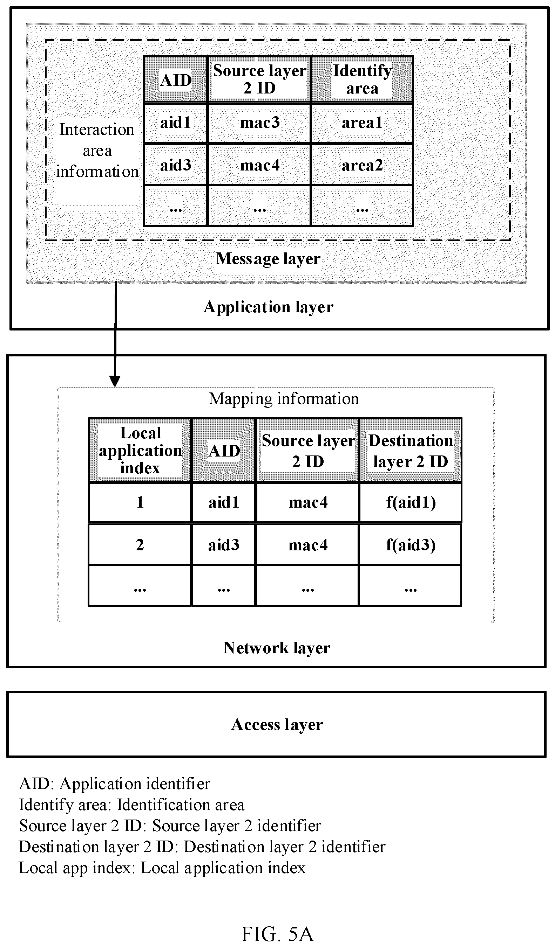

FIG. 5A is a schematic diagram of a protocol stack of a first terminal according to an embodiment of this application. As shown in FIG. 5A, mapping information is stored by the first terminal at a network layer. To be specific, Table 1 is located at the network layer. When the first terminal needs to add a mapping relationship to the mapping information or to delete a mapping relationship from the mapping information, the network layer of the first terminal may perform, by using the foregoing cross-layer primitive, corresponding processing on the mapping information maintained by the network layer.

Manner B: When the mapping information is stored at the message layer, the mapping information is established by the message layer. For example, when the first terminal receives the first message for the first time (therefore, the first message is not filtered), the first message carries the AID, the source layer 2 ID, and the destination layer 2 ID, and the first terminal determines to establish a unicast connection corresponding to the AID to the second terminal. In this case, the first terminal may directly add the mapping relationship among the AID, the source layer 2 ID, and the destination layer 2 ID that are in the first message to the mapping information at the network layer. In some possible embodiments, when the first terminal needs to delete the mapping relationship corresponding to the first message, the message layer of the first terminal may directly perform corresponding processing on the mapping information stored at the message layer.

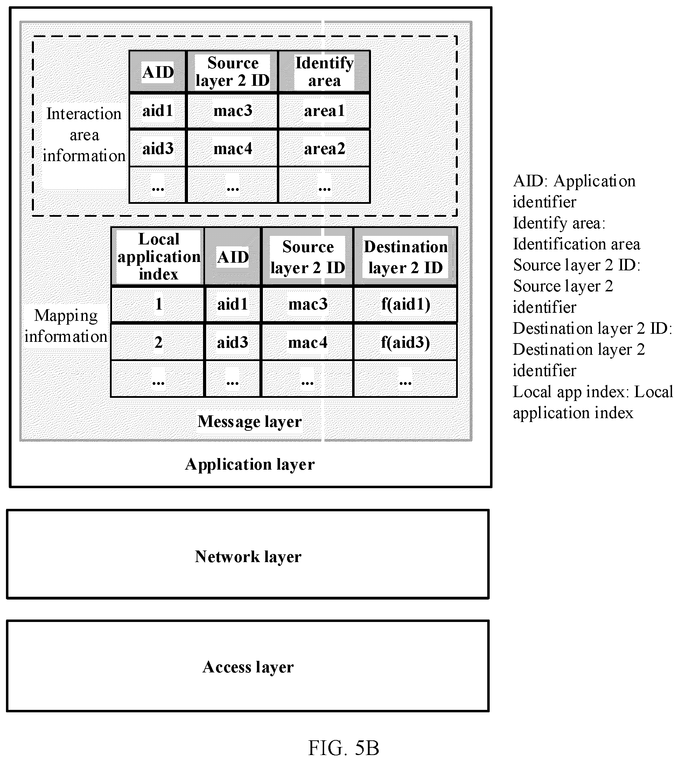

FIG. 5B is a schematic diagram of a protocol stack of a first terminal according to an embodiment of this application. As shown in FIG. 5B, mapping information is stored by the first terminal at a message layer. To be specific, Table 1 is located at the message layer. When the first terminal needs to add a mapping relationship to the mapping information or to delete a mapping relationship from the mapping information, the message layer of the first terminal may directly perform a related operation on the mapping information maintained by the message layer.

In some possible embodiments, when it is determined, in any one of the foregoing three combination manners, whether to filter the first message, the first mapping relationship may not exist in the mapping information, the second mapping relationship may not exist in the mapping information, or the third mapping relationship may not exist in the mapping information. That is, it indicates that the first terminal does not establish the unicast connection corresponding to the first message to the second terminal. In this case, the first message further includes an identification area, and the first terminal may further determine, with reference to the identification area, whether to filter the first message. Specifically, when the first terminal is located outside the identification area, it indicates that the first message is unrelated to the first terminal, and the first terminal filters the first message. When the first terminal is located in the identification area, because the unicast connection corresponding to the first message is not established, in response to the first message, the first terminal establishes the unicast connection corresponding to the first message to the second terminal, and adds the mapping relationship corresponding to the first message to the mapping information at the application layer or the network layer.

Specifically, when it is determined that the first terminal does not establish the unicast connection corresponding to the first message to the second terminal, the first terminal parses the first message to obtain the identification area in the first message. The identification area is used to indicate a service range of an application corresponding to the application identifier in the first message supported by the second terminal. That is, the application corresponding to the application identifier is valid only in the identification area. The identification area may be an identification radius, area range coordinates, or the like.

In a specific implementation, when the identification area is area range coordinates, the first terminal obtains location information of the first terminal, and determines whether the location information of the first terminal belongs to the area range coordinates. If the location information of the first terminal does not belong to the area range coordinates, it indicates that the first terminal is located outside the identification area, and therefore, the first terminal directly filters the first message. If the location information of the first terminal belongs to the area range coordinates, it indicates that the first terminal is located in the identification area, and in response to the first message, the first terminal establishes the unicast connection corresponding to the first message to the second terminal.

In another specific implementation, when the identification area is the identification radius, in addition to needing to obtain the location information of the first terminal, the first terminal further needs to obtain location information of the second terminal. The location information of the second terminal may be included in the first message, or may be included in another message broadcast by the second terminal. The location information of the second terminal may also be sent by another terminal that knows the location information of the second terminal. This is not specifically limited in this application. A distance between the first terminal and the second terminal is calculated based on the location information of the first terminal and the location information of the second terminal. When the distance is greater than or equal to the identification radius, it indicates that the first terminal is located outside the identification area, and therefore, the first terminal directly filters the first message. When the distance is less than the identification radius, it indicates that the first terminal is located in the identification area, and therefore, in response to the first message, the first terminal establishes the unicast connection corresponding to the first message to the second terminal.

It should be noted that, after parsing the first message to obtain the identification area, the first terminal may further add the mapping relationship among the application identifier, the source layer 2 identifier, and the identification area that are in the first message to interaction area information. The interaction area information is stored at the message layer (referring to FIG. 5A or FIG. 5B). The interaction area information is used to record the mapping relationship among the application identifier, the source layer 2 identifier, and the identification area that correspond to the unicast connection established by the first terminal.

The interaction area information may be similar to a mapping relationship table shown in Table 2. As shown in Table 2, Table 2 records two mapping relationships: aid1-mac3-area1 and aid3-mac4-area2, and aid1-mac3-area1 is used as an example for description. The mapping relationship indicates that the first terminal already establishes a unicast connection that is based on an application identifier aid1 and that is to a terminal whose source layer 2 identifier is mac3, and an identification area corresponding to the application identifier aid1 is area1. For example, as shown in FIG. 5A or FIG. 5B, the interaction area information shown in Table 2 is located at the message layer.

**Table 2**

| Application identifier | Source layer 2 identifier | Identification area |
|---|---|---|
| AID | Source layer 2 ID | Identify Area |
| aid1 | mac3 | area1 |
| aid3 | mac4 | area2 |
| ... | ... | ... |

In some possible embodiments, after the unicast connection corresponding to the first message is established, if a current location of the first terminal no longer falls within the identification area of the first message, the first terminal needs to delete the mapping relationship corresponding to the first message from the mapping information. In this way, when the first terminal is located again in the identification area corresponding to the application identifier, if the first message is received, because the mapping relationship corresponding to the first message does not exist in the mapping information, the first terminal may establish the unicast connection corresponding to the first message to the second terminal, to perform a related service (for example, a highway section payment). Therefore, it can be seen that, after a unicast interaction based on the first message is completed, if the first terminal is no longer located in the identification area, the operation of deleting the mapping relationship corresponding to the first message from the mapping information can effectively prevent, from being incorrectly filtered, the first message received when the first terminal is located in the identification area again.

In some possible embodiments, after the unicast connection corresponding to the first message is established, when the location of the first terminal no longer falls within the identification area of the first message, in addition to deleting the mapping relationship corresponding to the first message from the mapping information, the application layer may further delete the mapping relationship corresponding to the first message from the interaction area information. This is not specifically limited in this application. For example, for aid1-mac3-f(aid1) in Table 1, it is assumed that the first terminal establishes a unicast connection that is based on the first application (aid1) and that is to the third terminal. It can be seen from aid1-mac3-area1 in Table 2 that a service range of the first application supported by the third terminal is area1. When the first terminal is no longer located in areal, the first terminal deletes the mapping relationship aid1-mac3-f(aid1) from the mapping information (for example, Table 1). In addition, the first terminal deletes the mapping relationship aid1-mac3-area1 from the interaction area information (for example, Table 2).

For example, the first terminal establishes a unicast connection that is based on a highway near-field payment application and that is to the second terminal. It is assumed that the first terminal is an OBU, and the OBU completes, based on the unicast connection, a payment service for a highway section on which the OBU is located. If the OBU is still located in an identification area of the highway near-field payment application, when the OBU receives again a message that is of the same highway near-field payment application and that is broadcast by the second terminal, because the OBU has completed the payment service on the highway section once, the OBU may directly filter the message based on mapping information. When the OBU moves out of the identification area of the highway near-field payment application, the OBU needs to delete a mapping relationship corresponding to the unicast connection from the mapping information, so that when the OBU re-enters the identification area of the highway near-field payment application and receives the message that corresponds to the highway near-field payment application and that is broadcast by the second terminal, the OBU does not incorrectly filter the message.

It should be noted that the mapping information may be located at the message layer or the network layer, and the interaction area information is located at the message layer. In some possible embodiments, when both the mapping information and the interaction area information are maintained by the message layer, the mapping information and the interaction area information may also be combined into one table. The table is used to indicate a mapping relationship among the application identifier, the source layer 2 identifier, the destination layer 2 identifier, and the identification area that correspond to the unicast connection established by the first terminal.

It can be seen that, during implementation of this embodiment of this application, when receiving the first message periodically broadcast by the second terminal, the first terminal performs determining and analysis based on an application-related field (for example, at least one of the application identifier and the destination layer 2 identifier) in the first message and a sender identifier (that is, the source layer 2 identifier) in the first message; and when the first terminal already establishes the unicast connection corresponding to the first message to the second terminal, filters the first message that indicates a same application and that is broadcast by the second terminal. In this way, message filtering accuracy is increased, computing resource consumption caused by message parsing by the first terminal is reduced, and message processing efficiency is increased.

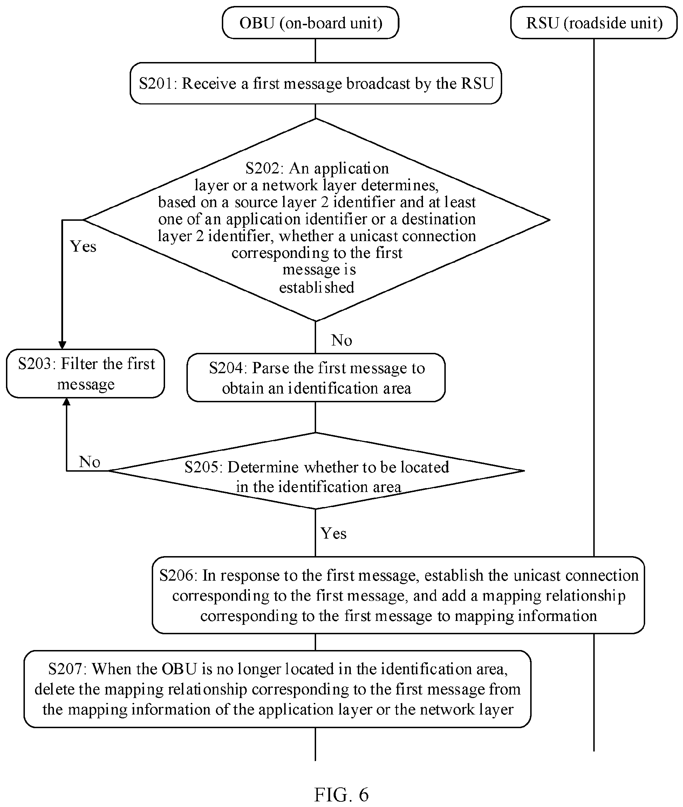

As shown in FIG. 6, the following describes a message filtering method according to an embodiment of this application. An example in which a first terminal is an OBU and a second terminal is an RSU may be used to describe an example of a solution. However, in this application, the first terminal is not limited only to the OBU, and the second terminal is not limited only to the RSU. In addition, the embodiment in FIG. 6 may be independent of the embodiment in FIG. 4, or may be a supplement to the embodiment in FIG. 4. The method includes, but is not limited to, the following steps.

S201: The OBU receives a first message broadcast by the RSU.

The OBU is referred to as an on-board unit, and is an on-board apparatus that communicates with the RSU by using an LTE-V2X or NR-V2X technology. The OBU is usually installed on a vehicle, for example, on a windshield. The RSU is mainly used in vehicle-road communication and is a key device for implementing an intelligent transportation system and an intelligent vehicle infrastructure cooperative system. The RSU includes an antenna (an RSU antenna), a radio frequency controller (an RSU controller), and the like. The RSU is usually disposed on a road side, and may further be connected to a road surface sensing/monitoring device (such as a signal light, a camera, or a microwave radar) to collect road information, road surface traffic information, and the like, and perform bidirectional communication and a data exchange with a nearby passing vehicle.

The first message includes an application identifier, a source layer 2 identifier, and a destination layer 2 identifier. The application identifier is used to distinguish between different applications, the source layer 2 identifier is a MAC address of the RSU, and the destination layer 2 identifier is a mapping value corresponding to the application identifier.

S202: An application layer or a network layer of the OBU determines, based on the source layer 2 identifier and at least one of the application identifier or the destination layer 2 identifier, whether a unicast connection corresponding to the first message is established.

The unicast connection corresponding to the first message is a communication connection that is between the OBU and the RSU and that is based on the application identifier. Three methods for determining, by the application layer or the network layer of the OBU, whether the unicast connection corresponding to the first message is established are respectively the foregoing first combination manner described in S102: determining whether the first mapping relationship between the application identifier and the source layer 2 identifier exists in the mapping information; the second combination manner: determining whether the second mapping relationship between the destination layer 2 identifier and the source layer 2 identifier exists in the mapping information; and the third combination manner: determining whether the third mapping relationship among the application identifier, the source layer 2 identifier, and the destination layer 2 identifier exists in the mapping information. The determining may be performed in any one of the foregoing three manners. When the first mapping relationship exists in the mapping information, when the second mapping relationship exists in the mapping information, or when the third mapping relationship exists in the mapping information, it is determined that the unicast connection corresponding to the first message is established, and S203 is performed. Alternatively, when the first mapping relationship does not exist in the mapping information, when the second mapping relationship does not exist in the mapping information, or when the third mapping relationship does not exist in the mapping information, it is determined that the unicast connection corresponding to the first message is not established, and S204 is performed. It should be noted that the mapping information may be established and maintained by the application layer or the network layer.

An example in which the mapping information is located at the network layer of the OBU is used. In a specific implementation, the OBU determines, in any one of the foregoing three combination manners, whether a mapping relationship corresponding to the first message exists in the mapping information. For example, if three fields included in the first message are (aid1, mac3, f(aid1)), it may be determined that a mapping relationship aid1-mac3-f(aid1) exists in the mapping information (referring to the foregoing Table 1). In this way, it indicates that the unicast connection corresponding to the first message is established, and S203 is performed. If three fields corresponding to the first message are (aid2, mac3, f(aid2)), it may be determined that a mapping relationship aid2-mac3-f(aid2) does not exist in the mapping information. Certainly, a mapping relationship aid2-mac3 also does not exist in the mapping information or a mapping relationship mac3-f(aid2) also does not exist in the mapping information. In this way, it indicates that the unicast connection corresponding to the first message is not established, and S204 is performed. The mapping information at the network layer may be established by using a cross-layer primitive DME-UserService.request() or DME-ProviderService.request(). For a specific process, refer to the related descriptions in S102. Details are not described herein again.

S203: The OBU filters the first message.

Specifically, when the unicast connection corresponding to the first message is established, the OBU filters the first message. In other words, the OBU refuses to establish the unicast connection corresponding to the first message to the RSU.

S204: The OBU parses the first message to obtain an identification area.

Specifically, when it is determined that the unicast connection corresponding to the first message is not established, the OBU further parses the first message to obtain the identification area. The identification area is a service range corresponding to the application identifier in the first message supported by the RSU. For example, in an application scenario of highway toll collection, the application identifier in the first message broadcast by the RSU is used to indicate that an application type is a highway toll payment, and the first message further includes the identification area. In this case, the identification area represents a current toll road section.

S205: The OBU determines whether the OBU falls within the identification area.

Specifically, the OBU may determine, based on location information of the OBU, whether the OBU falls within the identification area. When it is determined that the OBU is located in the identification area, S206 is performed. When it is determined that the OBU is not located in the identification area, S203 is performed. For a method for determining, by the OBU, whether the OBU is located in the identification area, refer to the related descriptions in S102. Details are not described herein again.

For example, in an application scenario of highway toll collection, the OBU performs determining based on the mapping information and the two fields in the first message that are the source layer 2 identifier and the application identifier, to learn that the OBU does not establish the unicast connection corresponding to the first message to the RSU. In this case, the OBU parses the first message to obtain a current toll road section, and determines whether a current location of the OBU falls within the toll road section. If the OBU is located in the toll road section, S206 is performed. If the OBU is not located in the toll road section, S203 is performed.

S206: In response to the first message, the OBU establishes the unicast connection corresponding to the first message to the RSU, and adds the mapping relationship corresponding to the first message to the mapping information.

Specifically, in response to the first message, the OBU sends a MAC address of the OBU to the RSU, to establish the unicast connection corresponding to the first message to the RSU, and the OBU adds the mapping relationship among the application identifier, the source layer 2 identifier, and the destination layer 2 identifier that are in the first message to the mapping information. In addition, the OBU may further add mapping information among the application identifier, the source layer 2 identifier, and the identification area that are in the first message to interaction area information.

It should be noted that the mapping information may be stored at the network layer or a message layer, the interaction area information is stored at the application layer, and the mapping relationship among the application identifier, the source layer 2 identifier, and the identification area that correspond to the unicast connection established by the OBU is stored in the interaction area information.

For example, if the first message includes (aid1, mac2, f(aid1), area1), where aid1 is an identifier of a first application, mac2 is the source layer 2 identifier of the RSU, f(aid1) is the destination layer 2 identifier of the RSU, and area1 is the identification area, area1 is obtained by parsing the first message. It is assumed that the OBU determines, based on the mapping information, that the OBU does not establish a unicast connection that is based on the application identifier aid1 and that is to the RSU, and the OBU is located in area1. In this case, the OBU sends the MAC address of the OBU to the RSU, to establish the unicast connection corresponding to the first message, adds aid1-mac2-f(aid1) to the mapping information, and adds aid1-mac2-area1 to the interaction area information.

S207: When the OBU is no longer located in the identification area, the OBU deletes the mapping relationship corresponding to the first message from the mapping information at the application layer or the network layer.

In a specific implementation, after the OBU completes an interaction that is based on the unicast connection corresponding to the first message with the RSU, a vehicle on which the OBU is located continues to travel, and a location of the vehicle changes. The location of the OBU is the same as the location of the vehicle on which the OBU is located. When the OBU is no longer located in the identification area (that is, the vehicle on which the OBU is located moves out of the identification area), the OBU deletes, from the mapping information at the application layer or the network layer, the mapping relationship corresponding to the unicast connection.

It should be noted that, after the OBU establishes the unicast connection corresponding to the first message, the OBU may determine in real time whether the OBU falls within the identification area in the first message, or the OBU may determine at intervals whether the OBU falls within the identification area in the first message. When determining that the OBU is no longer located in the identification area, the OBU deletes the mapping relationship corresponding to the unicast connection from the mapping information.

It should be noted that a storage location of the mapping information in S206 is consistent with a storage location of the mapping information in S207. That is, if the mapping information in S206 is located at the network layer, in S207, the network layer of the OBU deletes the mapping information corresponding to the first message from the mapping information. Alternatively, if the mapping information in S206 is located at the message layer, in S207, the message layer of the OBU deletes the mapping information corresponding to the first message from the mapping information.

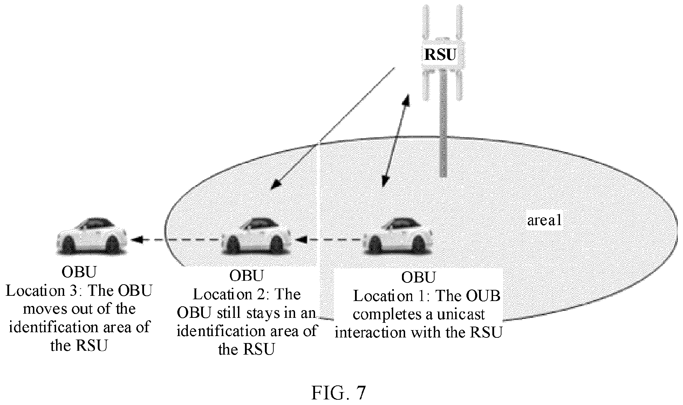

For example, FIG. 7 is a schematic diagram of a highway toll scenario. It is assumed that after the OBU receives, at a location 1 in FIG. 7 for the first time, the first message broadcast by the RSU, the first message includes (aid1, mac2, f(aid1), area1). The OBU establishes a unicast connection corresponding to the first message to the RSU, adds a mapping relationship aid1-mac2-f(aid1) corresponding to the first message to mapping information, and adds aid1-mac2-area1 corresponding to the first message to interaction area information. The OBU completes a unicast interaction with the RSU at the location 1 (completes a toll payment once). It is assumed that the OBU receives, again at a location 2, the first message broadcast by the RSU, and the OBU determines, based on the mapping information, that the OBU already establishes the unicast connection corresponding to the first message to the RSU. Therefore, the OBU directly filters the first message received at the location 2, meaning that the OBU has completed a service payment once at the location 1 in the identification area area1. Therefore, when the OBU still falls within the identification area areal, the OBU does not need to perform a payment again in response to the first message broadcast by the RSU again. However, as the OBU moves with the vehicle, when the OBU determines that a location of the OBU is no longer located in the identification area areal, the OBU deletes a mapping relationship aid1-mac3-f(aid1) corresponding to the first message from the mapping information, so that when the OBU re-enters areal, the first message broadcast by the RSU and received by the OBU is not incorrectly filtered.

The message filtering method provided in this embodiment of this application is applied to the scenario shown in FIG. 3. As shown in FIG. 3, the OBU is located in both the communication range of the RSU 1 and the communication range of the RSU 2. The OBU may receive the Msg 1 broadcast by the RSU 1 and the Msg 2 broadcast by the RSU 1. The Msg 1 includes (aid1, mac1, f(aid1), area1), and the Msg 2 includes (aid1, mac2, f(aid1), area2). If the OBU receives both the Msg 1 and the Msg 2 for the first time, the OBU determines that a mapping relationship corresponding to the Msg 1 does not exist in mapping information and a mapping relationship corresponding to the Msg 2 does not exist in the mapping information. Therefore, the OBU does not establish a unicast connection corresponding to the Msg 1 to the RSU 1 and also does not establish a unicast connection corresponding to the Msg 2 to the RSU 2. The OBU further determines that the OBU is currently located in an identification area area1 corresponding to the Msg 1 and is also located in an identification area area2 corresponding to the Msg 2. It may be understood that area1 is located in the communication range of the RSU 1, and area1 is located in the communication range of the RSU 2. Although the application identifier of the Msg 1 and the application identifier of the Msg 2 are the same (both the application identifiers are aid1, and it is assumed that aid1 represents a vehicle near-field payment service), the Msg 1 and the Msg 2 are not filtered in the foregoing case by using the message filtering method provided in this application. Correspondingly, in response to the Msg 1, the OBU establishes the unicast connection corresponding to the Msg 1 to the RSU 1, and adds a mapping relationship aid1-mac1-f(aid1) to the mapping information. In response to the Msg 2, the OBU establishes the unicast connection corresponding to the Msg 2 to the RSU 2, and adds a mapping relationship aid1-mac2-f(aid1) to the mapping information. In some possible embodiments, the OBU may further add the two mapping relationships aid1-mac1-area1 and aid1-mac2-area2 to the interaction area information. If the OBU receives, again in the area areal, the Msg 1 broadcast by the RSU 1, the OBU determines that the mapping relationship aid1-mac1-f(aid1) corresponding to the Msg 1 already exists in the mapping information, and the OBU directly filters the Msg 1 received this time. If the OBU receives, in the area area2, a Msg 2' broadcast by the RSU 2, where the Msg 2' includes (aid2, mac2, f(aid2), area2), assuming that aid2 represents a vehicle identity identification service, the OBU determines that none of mapping relationships that are aid2-mac2-f(aid2), aid2-mac2, and mac2-f(aid2) exists in the mapping information. Therefore, in response to the Msg 2', the OBU establishes a unicast connection corresponding to the Msg 2' to the RSU 2.

It should be noted that the foregoing is described only by using a vehicle near-field payment service on a highway as an example. The solution provided in this embodiment of this application not only may be applied to the vehicle near-field payment service, but also may be applied to another service, such as a vehicle identity identification service or a road condition safety service. This is not specifically limited in this application.

It can be seen that, during implementation of this embodiment of this application, after receiving the first message periodically broadcast by the RSU, the OBU determines, based on the mapping information at the application layer or the network layer, whether the unicast connection corresponding to the first message is established, and the OBU filters the first message when the unicast connection is established, so that broadcast messages that are broadcast by a same RSU and that indicate a same application are filtered, thereby greatly reducing consumed computing resources of the OBU. In addition, the OBU may further determine, with reference to the mapping information and the identification area obtained after the first message is parsed, whether to refuse to establish the unicast connection corresponding to the first message to the RSU, thereby increasing message filtering accuracy and message processing efficiency.

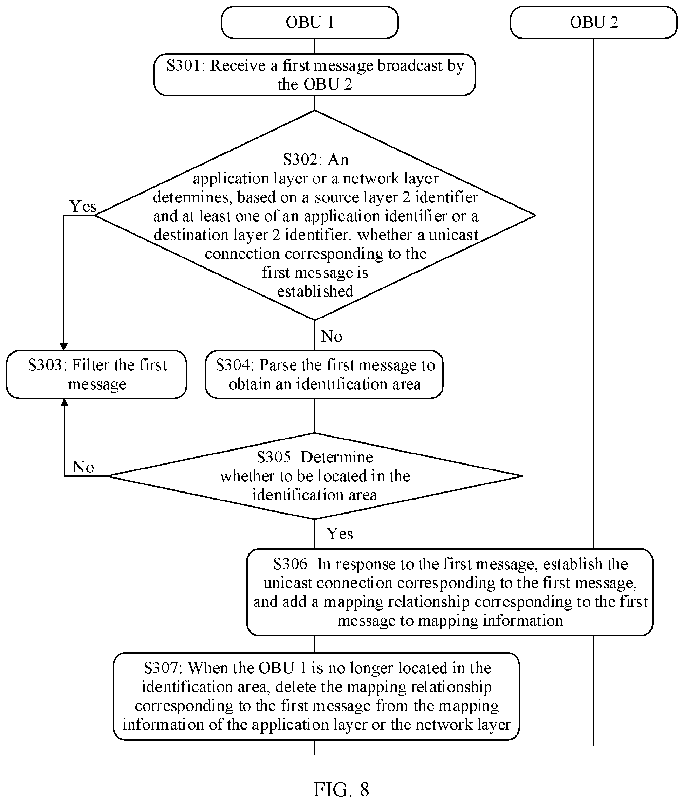

In another specific implementation, the message filtering provided in this application may be further performed to filter a broadcast message between OBUs. For example, a first terminal may be an OBU 1, and a second terminal may be an OBU 2. FIG. 8 is an example of a flowchart of a message filtering method. The embodiment in FIG. 8 may be independent of the embodiment in FIG. 4 and the embodiment in FIG. 6, or may be a supplement to the embodiment in FIG. 4 and the embodiment in FIG. 6. The method includes, but is not limited to, the following steps.

S301: An OBU 1 receives a first message broadcast by an OBU 2.

The first message broadcast by the OBU 2 includes an application identifier, a source layer 2 identifier, and a destination layer 2 identifier. The application identifier is used to indicate a type of an application. Different applications have different application identifiers. The source layer 2 identifier is a MAC address of the OBU 2. Because the first message is sent in a broadcast manner, the destination layer 2 identifier is a mapping value of the application identifier, and the destination layer 2 identifier corresponds to the application identifier.

S302: An application layer or a network layer of the OBU 1 determines, based on the source layer 2 identifier and at least one of the application identifier or the destination layer 2 identifier, whether a unicast connection corresponding to the first message is established.

Specifically, mapping information records a mapping relationship among the application identifier, the source layer 2 identifier, and the destination layer 2 identifier that correspond to the unicast connection established by the OBU 1. The mapping information may be established by the application layer, or may be established by the network layer. However, when the mapping information is established by the network layer, the application layer indicates, by using a cross-layer primitive, the network layer to establish the mapping information.

That the OBU determines, based on the mapping information, whether the unicast connection corresponding to the first message is established is: determining whether a mapping relationship corresponding to the first message exists in the mapping information, that is, a first mapping relationship between the application identifier and the source layer 2 identifier, a second mapping relationship between the destination layer 2 identifier and the source layer 2 identifier, or a third mapping relationship among the application identifier, the source layer 2 identifier, and the destination layer 2 identifier; when the mapping relationship corresponding to the first message exists in the mapping information, determining that the unicast connection corresponding to the first message is established, and performing S303; and when the mapping relationship corresponding to the first message does not exist in the mapping information, determining that the unicast connection corresponding to the first message is not established, and performing S304. For a specific determining method, refer to the related descriptions in S102. Details are not described herein again.

S303: The OBU 1 filters the first message.

S304: The OBU 1 parses the first message to obtain an identification area.

It should be noted that the identification area is a service range corresponding to the application identifier in the first message supported by the OBU 2. For example, when the first message is an application message prompting a vehicle to change lanes, the identification area is an area of an adjacent lane corresponding to the OBU 2.

S305: The OBU 1 determines whether the OBU 1 falls within the identification area.

Specifically, the OBU 1 determines, with reference to location information of the OBU 1, whether the OBU 1 falls within the identification area. When the OBU 1 is located in the identification area, it indicates that the first message is related to the OBU 1, and S306 is performed. When the OBU 1 is not located in the area, it indicates that the first message is unrelated to the OBU 1, and S303 is performed.

S306: In response to the first message, the OBU 1 establishes the unicast connection corresponding to the first message to the OBU 2, and adds the mapping relationship corresponding to the first message to the mapping information.

Specifically, when the mapping relationship corresponding to the first message does not exist in the mapping information and the OBU 1 is located in the identification area, in response to the first message, the OBU 1 establishes the unicast connection corresponding to the first message to the OBU 2, and adds the mapping relationship corresponding to the first message to the mapping information.

It should be noted that, after completing establishment of the unicast connection corresponding to the first message, the OBU 1 may perform a unicast interaction with the OBU 2 based on the unicast connection, that is, execute a corresponding service based on the unicast connection. For example, if an application type corresponding to the unicast connection is vehicle identity identification, a corresponding service is obtaining an identity of a vehicle. Alternatively, if the application identifier corresponding to the unicast connection indicates a lane change, a corresponding service is obtaining lane change information of a corresponding vehicle.

S307: When the OBU 1 is no longer located in the identification area, the OBU 1 deletes the mapping relationship corresponding to the first message from the mapping information at the application layer or the network layer.

Specifically, after the unicast interaction between the OBU 1 and the OBU 2 is completed, if the OBU 1 moves out of the identification area, that is, if the OBU 1 is no longer located in the identification area, the OBU 1 deletes the mapping relationship corresponding to the first message from the mapping information at the application layer or the network layer.

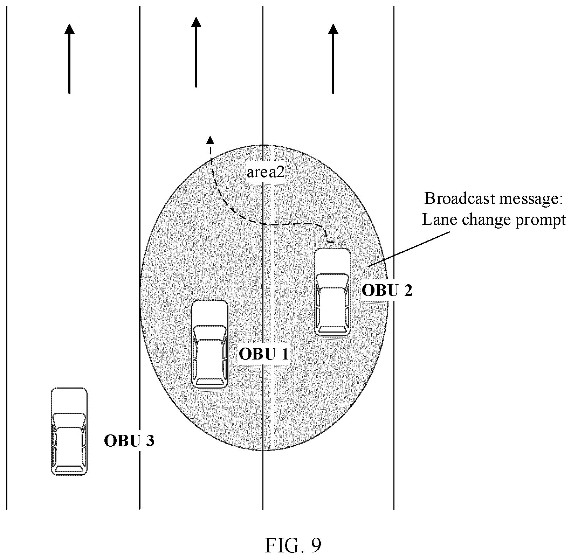

FIG. 9 is a schematic diagram of an application scenario. It is assumed that an OBU 1, an OBU 2, and an OBU 3 travel in a same direction on a road, and the OBU 3, the OBU 1, and the OBU 2 each sequentially occupy one lane from left to right. A lane on which the OBU 1 is located is an intermediate lane. A lane on which the OBU 3 is located and a lane on which the OBU 2 is located are separately adjacent to the lane on which the OBU 1 is located. It is assumed that the OBU 2 intends to change lanes leftwards to enter the lane on which the OBU 1 is located. In this case, the OBU 2 broadcasts a first message to notify a surrounding vehicle that the OBU 2 is about to change lanes. It is assumed that the first message includes (aid2, mac2, f(aid2)), where aid2 is an application identifier corresponding to a lane change, mac2 is a MAC address of the OBU 2, and f(aid2) is a mapping value of the application identifier. Because both the OBU 1 and the OBU 3 fall within a communication range of the OBU 2, both the OBU 1 and the OBU 3 can receive the first message broadcast by the OBU 2.

For the OBU 3, it is assumed that after the OBU 3 receives the first message, the OBU 3 determines that the mapping relationship f(aid2)-mac2 (the second combination manner in S102) does not exist in the mapping information. Therefore, the OBU 3 determines that the OBU 3 does not establish a unicast connection corresponding to the first message to the OBU 2. Further, the OBU 3 parses the first message to obtain an identification area area2 (an elliptic area shown in FIG. 9) in the first message. The OBU 3 determines that the OBU 3 is not currently located in area2, indicating that the first message received by the OBU 3 is unrelated to the OBU 3. In this case, the OBU 3 may directly filter the first message.

For the OBU 1, it is assumed that after the OBU 1 receives the first message, the OBU 1 determines that the mapping relationship aid2-mac2 (the first manner in S102) does not exist in the mapping information. Therefore, the OBU 1 determines that the OBU 1 does not establish a unicast connection corresponding to the first message to the OBU 2. Further, the OBU 1 parses the first message to obtain an identification area area2 (an elliptic area shown in FIG. 9) in the first message. The OBU 1 determines that the OBU 1 is currently located in area2, indicating that the first message received by the OBU 1 is related to the OBU 1. In response to the first message, the OBU 1 sends a MAC address of the OBU 1 to the OBU 2, to establish the unicast connection corresponding to the first message to the OBU 2, and adds a mapping relationship aid2-mac2-f(aid2) to the mapping information. After completing establishment of the unicast connection, the OBU 1 may perform a unicast interaction with the OBU 2 based on the established unicast connection. For example, the OBU 1 may obtain, from the OBU 2, information such as a moment and a speed at which the OBU 2 performs the lane change this time. The OBU 1 continues to travel. When the OBU 1 is still located in area2, if the OBU 1 receives again the first message broadcast by the OBU 2, the OBU 1 may directly filter, through determining performed in the foregoing manner, the first message received this time. When the OBU 1 is no longer located in area2, the OBU 1 may delete the mapping relationship aid2-mac2-f(aid2) from the mapping information.

It can be seen that, during implementation of this embodiment of this application, during an interaction between OBUs, when already establishing a unicast connection corresponding to a broadcast message to a target OBU, an OBU can accurately filter broadcast messages that are repeatedly sent by the target OBU and that indicate a same application service, thereby greatly reducing computing resources consumed due to message parsing by the OBU, and increasing message processing efficiency.

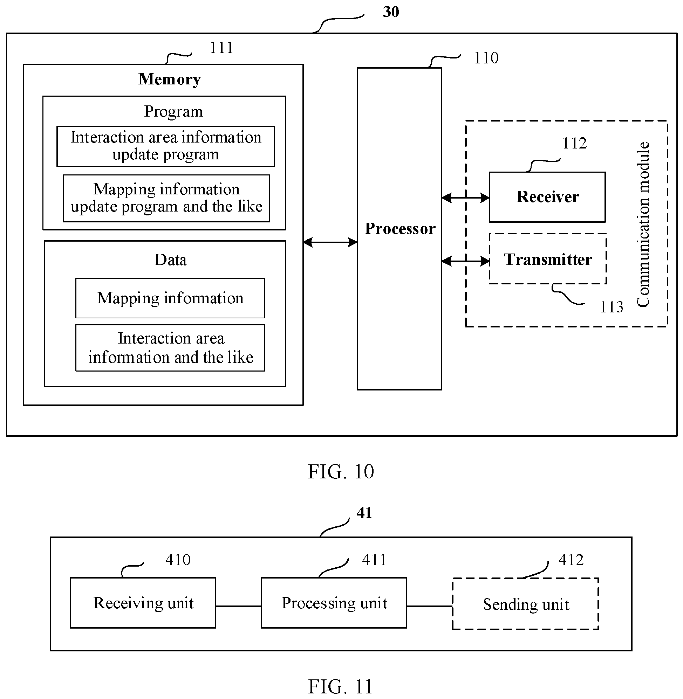

FIG. 10 is a schematic diagram of a structure of a computing apparatus according to an embodiment of this application. The computing apparatus 30 includes at least a processor 110, a memory 111, and a receiver 112. In some possible embodiments, the computing apparatus 30 further includes a transmitter 113. The receiver 112 and the transmitter 113 may also be replaced with communication interfaces, and are configured to provide an information input and/or output for the processor 110. Optionally, the memory 111, the receiver 112, and the transmitter 113 may separately be connected to or coupled to the processor 110 by using a bus. The computing apparatus 30 may be the first terminal in the embodiment in FIG. 4, or the OBU in the embodiment in FIG. 6, or the OBU 1 in the embodiment in FIG. 8.

The receiver 112 is configured to receive a first message broadcast by an on-board unit, a roadside unit, or the like. When the computing apparatus 30 determines to establish a unicast connection corresponding to the first message to the on-board unit, the roadside unit, or the like, the transmitter 113 is configured to send a MAC address of the computing apparatus 30 to the on-board unit, the roadside unit, or the like. The receiver 112 and the transmitter 113 may include an antenna and a chip set that are configured to communicate with a device, a sensor, an RSU, or another entity device in a vehicle directly or through an air interface. The transmitter 113 and the transceiver 112 form a communication module. The communication module may be configured to receive and send a message through one or more other types of wireless communication (for example, protocols). The wireless communication includes Bluetooth, the IEEE 802.11 communication protocol, a cellular technology, the worldwide interoperability for microwave access (Worldwide Interoperability for Microwave Access, WiMAX) or the LTE (Long Term Evolution, long term evolution), a ZigBee protocol, the dedicated short-range communications (Dedicated Short Range Communications, DSRC), the RFID (Radio Frequency Identification, radio frequency identification) communication, and the like.

For specific implementation of the operations performed by the processor 110, refer to the specific operations in the foregoing method embodiments, for example, determining whether the unicast connection corresponding to the first message is established and filtering the first message. The processor 110 may include one or more general-purpose processors, such as a central processing unit (Central Processing Unit, CPU), or a combination of a CPU and a hardware chip. The hardware chip may be an application-specific integrated circuit (Application-Specific Integrated Circuit, ASIC), a programmable logic device (Programmable Logic Device, PLD), or a combination thereof. The PLD may be a complex programmable logic device (Complex Programmable Logic Device, CPLD), a field programmable gate array (Field Programmable Gate Array, FPGA), a generic array logic (Generic Array Logic, GAL), or any combination thereof.

The memory 111 may include a volatile memory (Volatile Memory), for example, a random access memory (Random Access Memory, RAM). The memory 111 may alternatively include a non-volatile memory (Non-Volatile Memory), for example, a read-only memory (Read-Only Memory, ROM), a flash memory (Flash Memory), a hard disk drive (Hard Disk Drive, HDD), or a solid-state drive (Solid-State Drive, SSD). The memory 111 may alternatively include a combination of the foregoing types. The memory 111 may store a program and data. The stored program includes a mapping information update program, an interaction area information update program, and the like. The stored data includes mapping information (that is, a mapping relationship among an application identifier, a source layer 2 identifier, and a destination layer 2 identifier), interaction area information (that is, a mapping relationship among an application identifier, a source layer 2 identifier, and an identification area), and the like. The memory 111 may exist independently, or may be integrated into the processor 110.

In addition, FIG. 10 is merely an example of the computing apparatus 30. The computing apparatus 30 may include more or fewer components than those shown in FIG. 10, or have different component configuration manners. In addition, each component shown in FIG. 10 may be implemented by hardware, software, or a combination of hardware and software.

In this embodiment of this application, the computing apparatus 30 is configured to implement the method described in FIG. 4, the method on an OBU side described in the embodiment in FIG. 6, and the method on an OBU 1 side described in the embodiment in FIG. 8.

FIG. 11 is a schematic diagram of a function structure of a computing apparatus according to an embodiment of this application. The computing apparatus 41 includes a receiving unit 410 and a processing unit 411. Optionally, in some possible embodiments, the computing apparatus 41 further includes a sending unit 412. The computing apparatus 41 may be implemented through hardware, software, or a combination of software and hardware.

The computing apparatus 41 establishes a first unicast connection to a third terminal, and stores a mapping relationship between a first identity and a first application identifier based on the first unicast connection. The first identity is a unique identifier of the third terminal, and the first application identifier is an identifier of an application service provided by the third terminal. The receiving unit 410 is configured to receive a first message broadcast by a second terminal. The first message includes a second identity and a second application identifier, the second identity is a unique identifier of the second terminal, and the second application identifier is an identifier of an application service provided by the second terminal. The processing unit 411 is configured to: when the second identity is the same as the first identity and the second application identifier matches the first application identifier, refuse to establish a second unicast connection to the second terminal. In some possible embodiments, the sending unit 412 is configured to: in response to the first message, send an identity of the computing apparatus 41 to the second terminal, to establish the second unicast connection.

Functional modules of the computing apparatus 41 may be configured to implement the method described in the embodiment in FIG. 4. In the embodiment in FIG. 4, the receiving unit 410 may be configured to perform S101, and the processing unit 411 may be configured to perform S102. The functional modules of the computing apparatus 41 may be further configured to implement the method on an OBU side described in the embodiment in FIG. 6 and the method on an OBU 1 side described in the embodiment in FIG. 8. For brevity of this specification, details are not described herein again.

In the foregoing embodiments in this specification, the description of each embodiment has respective focuses. For a part that is not described in detail in an embodiment, refer to related descriptions in other embodiments.

It should be noted that a person of ordinary skill in the art may see that all or some of the steps of the methods in the foregoing embodiments may be implemented by a program instructing related hardware. The program may be stored in a computer-readable storage medium. The storage medium includes a read-only memory (Read-Only Memory, ROM), a random access memory (Random Access Memory, RAM), a programmable read-only memory (Programmable Read-only Memory, PROM), an erasable programmable read-only memory (Erasable Programmable Read Only Memory, EPROM), a one-time programmable read-only memory (One-time Programmable Read-Only Memory, OTPROM), an electrically-erasable programmable read-only memory (Electrically-Erasable Programmable Read-Only Memory, EEPROM), a compact disc read-only memory (Compact Disc Read-Only Memory, CD-ROM) or another optical disc storage, a magnetic disk storage, a magnetic tape storage, or any other computer readable medium capable of carrying or storing data.

The technical solutions of this application essentially, or the part contributing to the conventional technology, or all or some of the technical solutions may be implemented in a form of a software product. The computer software product is stored in a storage medium and includes several instructions for instructing a device (which may be a personal computer, a server, or a network device, a robot, a single-chip microcomputer, a chip, a robot, or the like) to perform all or some of the steps of the methods described in embodiments of this application.

## Claims

1. A message filtering method, applied to a first terminal, and comprising: establishing, by the first terminal, a first unicast connection to a third terminal, and storing, by the first terminal, a mapping relationship between a first identity and a first application identifier based on the first unicast connection, wherein the first identity is a unique identifier of the third terminal, the first application identifier is an identifier of an application service provided by the third terminal, and the method comprises:
receiving (S101) a first message broadcast by a second terminal, wherein the first message comprises a second identity and a second application identifier, the second identity is a unique identifier of the second terminal, and the second application identifier is an identifier of an application service provided by the second terminal; and
when the second identity is the same as the first identity and the second application identifier matches the first application identifier, refusing, by the first terminal, to establish a second unicast connection to the second terminal.

2. The method according to claim 1, wherein the first identity is a media access control, MAC, address of the third terminal, the second identity is a MAC address of the second terminal, the first application identifier comprises at least one of an identifier of a first application or a mapping value of the identifier of the first application, and the second application identifier comprises at least one of an identifier of a second application or a mapping value of the identifier of the second application.

3. The method according to claim 2, wherein when the first application identifier is the identifier of the first application and the second application identifier is the identifier of the second application, that the second application identifier matches the first application identifier means that the identifier of the second application is the same as the identifier of the first application.

4. The method according to claim 2, wherein when the first application identifier is the mapping value of the identifier of the first application and the second application identifier is the mapping value of the identifier of the second application, that the second application identifier matches the first application identifier means that the mapping value of the identifier of the second application is the same as the mapping value of the identifier of the first application.

5. The method according to claim 2, wherein when the first application identifier comprises the identifier of the first application and the mapping value of the identifier of the first application, and the second application identifier comprises the identifier of the second application and the mapping value of the identifier of the second application, that the second application identifier matches the first application identifier means that the identifier of the second application is the same as the identifier of the first application, and that the mapping value of the identifier of the second application is the same as the mapping value of the identifier of the first application.

6. The method according to any one of claims 1 to 5, wherein the first message further comprises an identification area, the identification area is used to indicate a service range of the second application supported by the second terminal, and the method further comprises:
when the second identity is different from the first identity or the second application identifier does not match the first application identifier, obtaining the identification area; and
when the first terminal is not located in the identification area, refusing, by the first terminal, to establish the second unicast connection to the second terminal.

7. The method according to claim 6, wherein the method further comprises:
when the second identity is different from the first identity, or the second application identifier does not match the first application identifier, and the first terminal is located in the identification area, in response to the first message, establishing the second unicast connection, and storing a mapping relationship between the second identity and the second application identifier.

8. The method according to claim 7, wherein the method further comprises:
after establishing the second unicast connection, when the first terminal is no longer located in the identification area, deleting the stored mapping relationship between the second identity and the second application identifier.

9. The method according to any one of claims 1 to 8, wherein the mapping relationship between the first identity and the first application identifier is stored in mapping information.

10. The method according to claim 9, wherein the mapping information is stored at a network layer or a message layer of the first terminal.

11. The method according to any one of claims 2 to 10, wherein the second identity is a source layer 2 identifier in the first message, the identifier of the second application is an application identifier in the first message, and the mapping value of the identifier of the second application is a destination layer 2 identifier in the first message.

12. The method according to any one of claims 1 to 11, wherein the first message is a unicast service announcement, and the first message is carried by a dedicated service announcement DSA.

13. The method according to any one of claims 1 to 12, wherein the second terminal is a roadside unit RSU or an on-board unit OBU.

14. A message filtering apparatus, comprising units configured to perform the steps in the method according to any one of claims 1 to 13.

15. A computer-readable storage medium, comprising a program, wherein when the program is executed by a processor (110), the method according to any one of claims 1 to 13 is performed.

## Patentansprüche

1. Nachrichtenfilterungsverfahren, das auf ein erstes Endgerät angewandt wird und Folgendes umfasst: Herstellen einer ersten Unicast-Verbindung zu einem dritten Endgerät durch das erste Endgerät und Speichern einer Zuordnungsbeziehung zwischen einer ersten Identität und einem ersten Anwendungsidentifizierer durch das erste Endgerät basierend auf der ersten Unicast-Verbindung, wobei die erste Identität ein eindeutiger Identifizierer des dritten Endgeräts ist, der erste Anwendungsidentifizierer ein Identifizierer eines durch das dritte Endgerät bereitgestellten Anwendungsdienstes ist und das Verfahren Folgendes umfasst:
Empfangen (S101) einer durch ein zweites Endgerät gesendeten ersten Nachricht, wobei die erste Nachricht eine zweite Identität und einen zweiten Anwendungsidentifizierer umfasst, die zweite Identität ein eindeutiger Identifizierer des zweiten Endgeräts ist und der zweite Anwendungsidentifizierer ein Identifizierer eines durch ein zweites Endgerät bereitgestellten Anwendungsdienstes ist; und
wenn die zweite Identität dieselbe wie die erste Identität ist und der zweite Anwendungsidentifizierer mit dem ersten Anwendungsidentifizierer übereinstimmt, Ablehnen, eine zweite Unicast-Verbindung mit dem zweiten Endgerät herzustellen, durch das erste Endgerät.

2. Verfahren nach Anspruch 1, wobei die erste Identität eine Medienzugriffssteuerungs(media access control, MAC)-Adresse des dritten Endgeräts ist, die zweite Identität eine MAC-Adresse des zweiten Endgeräts ist, der erste Anwendungsidentifizierer mindestens eines von einem Identifizierer einer ersten Anwendung oder einem Zuordnungswert des Identifizierers der ersten Anwendung umfasst und der zweite Anwendungsidentifizierer mindestens eines von einem Identifizierer einer zweiten Anwendung oder einem Zuordnungswert des Identifizierers der zweiten Anwendung umfasst.

3. Verfahren nach Anspruch 2, wobei, wenn der erste Anwendungsidentifizierer der Identifizierer der ersten Anwendung ist und der zweite Anwendungsidentifizierer der Identifizierer der zweiten Anwendung ist, die Tatsache, dass der zweite Anwendungsidentifizierer mit dem ersten Anwendungsidentifizierer übereinstimmt, bedeutet, dass der Identifizierer der zweiten Anwendung derselbe ist wie der Identifizierer der ersten Anwendung.

4. Verfahren nach Anspruch 2, wobei, wenn der erste Anwendungsidentifizierer der Zuordnungswert des Identifizierers der ersten Anwendung ist und der zweite Anwendungsidentifizierer der Zuordnungswert des Identifizierers der zweiten Anwendung ist, die Tatsache, dass der zweite Anwendungsidentifizierer mit dem ersten Anwendungsidentifizierer übereinstimmt, bedeutet, dass der Zuordnungswert des Identifizierers der zweiten Anwendung derselbe ist wie der Zuordnungswert des Identifizierers der ersten Anwendung.

5. Verfahren nach Anspruch 2, wobei, wenn der erste Anwendungsidentifizierer den Identifizierer der ersten Anwendung und den Zuordnungswert des Identifizierers der ersten Anwendung umfasst und der zweite Anwendungsidentifizierer den Identifizierer der zweiten Anwendung und den Zuordnungswert des Identifizierers der zweiten Anwendung umfasst, die Tatsache, dass der zweite Anwendungsidentifizierer mit dem ersten Anwendungsidentifizierer übereinstimmt, bedeutet, dass der Identifizierer der zweiten Anwendung derselbe ist wie der Identifizierer der ersten Anwendung und dass der Zuordnungswert des Identifizierers der zweiten Anwendung derselbe ist wie der Zuordnungswert des Identifizierers der ersten Anwendung.

6. Verfahren nach einem der Ansprüche 1 bis 5, wobei die erste Nachricht ferner einen Identifikationsbereich umfasst, wobei der Identifikationsbereich verwendet wird, um einen Dienstbereich der durch das zweite Endgerät unterstützten zweiten Anwendung anzuzeigen, und wobei das Verfahren ferner Folgendes umfasst:
wenn die zweite Identität von der ersten Identität verschieden ist oder der zweite Anwendungsidentifizierer nicht mit dem ersten Anwendungsidentifizierer übereinstimmt, Erhalten des Identifikationsbereichs; und
wenn sich das erste Endgerät nicht in dem Identifizierungsbereich befindet, Ablehnen, die zweite Unicast-Verbindung zu dem zweiten Endgerät herzustellen, durch das erste Endgerät.

7. Verfahren nach Anspruch 6, wobei das Verfahren ferner Folgendes umfasst:
wenn die zweite Identität von der ersten Identität verschieden ist oder der zweite Anwendungsidentifizierer nicht mit dem ersten Anwendungsidentifizierer übereinstimmt und sich das erste Endgerät in dem Identifizierungsbereich befindet, Herstellen der zweiten Unicast-Verbindung und Speichern einer Zuordnungsbeziehung zwischen der zweiten Identität und dem zweiten Anwendungsidentifizierer als Reaktion auf die erste Nachricht.

8. Verfahren nach Anspruch 7, wobei das Verfahren ferner Folgendes umfasst:
Löschen der gespeicherten Zuordnungsbeziehung zwischen der zweiten Identität und dem zweiten Anwendungsidentifizierer nach dem Herstellen der zweiten Unicast-Verbindung, wenn sich das erste Endgerät nicht mehr in dem Identifikationsbereich befindet.

9. Verfahren nach einem der Ansprüche 1 bis 8, wobei die Zuordnungsbeziehung zwischen der ersten Identität und dem ersten Anwendungsidentifizierer in Zuordnungsinformationen gespeichert ist.

10. Verfahren nach Anspruch 9, wobei die Zuordnungsinformationen in einer Netzwerkschicht oder einer Nachrichtenschicht des ersten Endgeräts gespeichert sind.

11. Verfahren nach einem der Ansprüche 2 bis 10, wobei die zweite Identität ein Quellschicht-2-Identifizierer in der ersten Nachricht ist, der Identifizierer der zweiten Anwendung ein Anwendungsidentifizierer in der ersten Nachricht ist und der Zuordnungswert des Identifizierers der zweiten Anwendung ein Zielschicht-2-Identifizierer in der ersten Nachricht ist.

12. Verfahren nach einem der Ansprüche 1 bis 11, wobei die erste Nachricht eine Unicast-Dienstankündigung ist und die erste Nachricht durch eine dedizierte Dienstankündigung (dedicated service announcement, DSA) übertragen wird.

13. Verfahren nach einem der Ansprüche 1 bis 12, wobei das zweite Endgerät eine straßenseitige Einheit (roadside unit, RSU) oder eine eingebaute Einheit (on-board unit, OBU) ist.

14. Nachrichtenfilterungsvorrichtung, umfassend Einheiten, die dazu konfiguriert sind, die Schritte in dem Verfahren nach einem der Ansprüche 1 bis 13 durchzuführen.

15. Computerlesbares Speichermedium, umfassend ein Programm, wobei, wenn das Programm durch einen Prozessor (110) ausgeführt wird, das Verfahren nach einem der Ansprüche 1 bis 13 durchgeführt wird.

## Revendications

1. Procédé de filtrage de messages, appliqué à un premier terminal, et comprenant : l'établissement, par le premier terminal, d'une première connexion unicast à un troisième terminal, et le stockage, par le premier terminal, d'une relation de mappage entre une première identité et un premier identifiant d'application sur la base de la première connexion unicast, dans lequel la première identité est un identifiant unique d'un troisième terminal, le premier identifiant d'application est un identifiant d'un service d'application fourni par le troisième terminal, et le procédé comprend :
la réception (S101) d'un premier message diffusé par un deuxième terminal, dans lequel le premier message comprend une seconde identité et un second identifiant d'application, la seconde identité est un identifiant unique du deuxième terminal, et le second identifiant d'application est un identifiant d'un service d'application fourni par le deuxième terminal ; et
lorsque la seconde identité est la même que la première identité et que le second identifiant d'application correspond au premier identifiant d'application, le refus, par le premier terminal, d'établir une seconde connexion unicast au deuxième terminal.

2. Procédé selon la revendication 1, dans lequel la première identité est une adresse de commande d'accès au support, MAC, du troisième terminal, la seconde identité est une adresse MAC du deuxième terminal, le premier identifiant d'application comprend au moins l'un d'un identifiant d'une première application ou d'une valeur de mappage de l'identifiant de la première application, et le second identifiant d'application comprend au moins l'un d'un identifiant d'une seconde application ou d'une valeur de mappage de l'identifiant de la seconde application.

3. Procédé selon la revendication 2, dans lequel, lorsque le premier identifiant d'application est l'identifiant de la première application et le second identifiant d'application est l'identifiant de la seconde application, le fait que le second identifiant d'application corresponde au premier identifiant d'application signifie que l'identifiant de la seconde application est le même que l'identifiant de la première application.

4. Procédé selon la revendication 2, dans lequel, lorsque le premier identifiant d'application est la valeur de mappage de l'identifiant de la première application et que le second identifiant d'application est la valeur de mappage de l'identifiant de la seconde application, le fait que le second identifiant d'application corresponde au premier identifiant d'application signifie que la valeur de mappage de l'identifiant de la seconde application est la même que la valeur de mappage de l'identifiant de la première application.

5. Procédé selon la revendication 2, dans lequel, lorsque le premier identifiant d'application comprend l'identifiant de la première application et la valeur de mappage de l'identifiant de la première application, et que le second identifiant d'application comprend l'identifiant de la seconde application et la valeur de mappage de l'identifiant de la seconde application, le fait que le second identifiant d'application corresponde au premier identifiant d'application signifie que l'identifiant de la seconde application est le même que l'identifiant de la première application, et que la valeur de mappage de l'identifiant de la seconde application est la même que la valeur de mappage de l'identifiant de la première application.

6. Procédé selon l'une quelconque des revendications 1 à 5, dans lequel le premier message comprend également une zone d'identification, la zone d'identification est utilisée pour indiquer une plage de service de la seconde application prise en charge par le deuxième terminal, et le procédé comprend en outre :
lorsque la seconde identité est différente de la première identité ou que le second identifiant d'application ne correspond pas au premier identifiant d'application, l'obtention de la zone d'identification ; et
lorsque le premier terminal n'est pas situé dans la zone d'identification, le refus, par le premier terminal, d'établir la seconde connexion unicast au deuxième terminal.

7. Procédé selon la revendication 6, dans lequel le procédé comprend en outre :
lorsque la seconde identité est différente de la première identité, ou que le second identifiant d'application ne correspond pas au premier identifiant d'application, et que le premier terminal est situé dans la zone d'identification, en réponse au premier message, l'établissement de la seconde connexion unicast et le stockage d'une relation de mappage entre la seconde identité et le second identifiant d'application.

8. Procédé selon la revendication 7, dans lequel le procédé comprend en outre :
après l'établissement d'une seconde connexion unicast, lorsque le premier terminal n'est plus situé dans la zone d'identification, la suppression de la relation de mappage stockée entre la seconde identité et le second identifiant d'application.

9. Procédé selon l'une quelconque des revendications 1 à 8, dans lequel la relation de mappage entre la première identité et le premier identifiant d'application est stockée dans des informations de mappage.

10. Procédé selon la revendication 9, dans lequel les informations de mappage sont stockées au niveau d'une couche réseau ou d'une couche de messages du premier terminal.

11. Procédé selon l'une quelconque des revendications 2 à 10, dans lequel la seconde identité est un identifiant de couche 2 source dans le premier message, l'identifiant de la seconde application est un identifiant d'application dans le premier message et la valeur de mappage de l'identifiant de la seconde application est un identifiant de couche 2 de destination dans le premier message.

12. Procédé selon l'une quelconque des revendications 1 à 11, dans lequel le premier message est une annonce de service unicast, et le premier message est transporté par une annonce de service dédiée, DSA.

13. Procédé selon l'une quelconque des revendications 1 à 12, dans lequel le deuxième terminal est une unité de bord de route (RSU) ou une unité embarquée (OBU).

14. Appareil de filtrage de messages, comprenant des unités configurées pour réaliser les étapes du procédé selon l'une quelconque des revendications 1 à 13.

15. Support de stockage lisible par ordinateur, comprenant un programme, dans lequel lorsque le programme est exécuté par un processeur (110), le procédé selon l'une quelconque des revendications 1 à 13 est réalisé.
